(19) **Europäisches Patentamt**
**European Patent Office**
**Office européen des brevets**

(11) **EP 4 109 131 B1**

(12) **EUROPEAN PATENT SPECIFICATION**

(45) Date of publication and mention
of the grant of the patent:
**03.09.2025   Bulletin 2025/36**

(21) Application number: **21767321.9**

(22) Date of filing: **11.03.2021**

(51) International Patent Classification (IPC):
*G01S 7/497* (2006.01)    *G01S 17/00* (2020.01)
*G01S 17/42* (2006.01)    *G01S 17/89* (2020.01)
*G01S 7/481* (2006.01)

(52) Cooperative Patent Classification (CPC):
**G01S 7/4972; G01S 7/497; G01S 17/006;**
**G01S 17/42; G01S 17/89;** G01S 7/4815;
G01S 7/4817

(86) International application number:
**PCT/CN2021/080111**

(87) International publication number:
**WO 2021/180149 (16.09.2021 Gazette 2021/37)**

(54) **LASER RADAR PARAMETER CALIBRATION METHOD AND APPARATUS**

VERFAHREN UND VORRICHTUNG ZUR KALIBRIERUNG VON LASERRADARPARAMETERN

PROCÉDÉ ET APPAREIL D'ÉTALONNAGE DE PARAMÈTRES DE RADAR À LASER

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **12.03.2020   CN 202010170340**

(43) Date of publication of application:
**28.12.2022   Bulletin 2022/52**

(73) Proprietor: **Shenzhen Yinwang Intelligent**
**Technologies Co., Ltd.**
**Shenzhen City, Guangdong 518129 (CN)**

(72) Inventors:
• **HU, Xuan**
**Shenzhen, Guangdong 518129 (CN)**
• **SHI, Xianling**
**Shenzhen, Guangdong 518129 (CN)**
• **HUANG, Zhizhen**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**WO-A1-2019/032588**     **CN-A- 106 597 417**
**CN-A- 107 192 350**     **US-A1- 2019 056 484**

• **FARAZ M MIRZAEI ET AL: "3D Lidar-Camera**
**Intrinsic and Extrinsic Calibration: Observability**
**Analysis and Analytical Least Squares-based**
**Initialization", 1 January 2012 (2012-01-01),**
**XP055124525, Retrieved from the Internet**
**<URL:http://www-users.cs.umn.edu/~faraz/pdfs/**
**VelodyneLadybug.pdf> [retrieved on 20140620]**
• **YU, DEQI: "Integration and Quality Control of**
**Mobile Laser Scanning Mapping System", BASIC**
**SCIENCES, CHINA MASTER'S THESES FULL-**
**TEXT DATABASE, 20 October 2018 (2018-10-20),**
**CN, pages 1 - 92, XP009530315, ISSN: 1674-0246**
• **YAN, LI: "Error Analysis and Self-Calibration of**
**the Multi-Line Terrestrial Laser Scanner",**
**JOURNAL OF GEOMATICS, vol. 44, no. 05, 31**
**October 2019 (2019-10-31), pages 1 - 7,**
**XP009530303, ISSN: 1007-3817, DOI: 10.14188/**
**j.2095- 6045.2018486**

• **N MUHAMMAD ; S LACROIX: "Calibration of a Rotating Multi-Beam Lidar", INTELLIGENT ROBOTS AND SYSTEMS (IROS), 2010 IEEE/RSJ INTERNATIONAL CONFERENCE ON, 18 October 2010 (2010-10-18), pages 5648 - 5653, XP031920639, ISBN: 978-1-4244-6674-0, DOI: 10.1109/IROS.2010.5651382**

## Description

### TECHNICAL FIELD

This application relates to the field of communication technologies, and in particular, to a method and an apparatus for calibrating a parameter of a laser radar.

### BACKGROUND

Light detection and ranging (light detection and ranging) is usually represented by an acronym LiDAR or a laser radar. The laser radar may transmit laser light to a detection environment, to detect an echo signal reflected by each sampling point in the detection environment and measure a target distance and a target angle of each sampling point based on each echo signal, and then, input each target distance and each target angle into a point cloud computing algorithm that is prestored on the laser radar, to obtain a measurement value of three-dimensional coordinates of each sampling in a same coordinate system, that is, a measurement value of a point cloud used to indicate the detection environment.

Generally, one or more variable parameters are set in the point cloud computing algorithm. A value assigned to the variable parameter is adjusted, so that an error (a measurement error for short) between the measurement value that is of the point cloud and that is obtained by using the point cloud computing algorithm and a true value of the point cloud can be changed. To reduce the measurement error and improve accuracy of a laser radar system, before a measurement operation, the laser radar system may first calibrate a value of the variable parameter in the point cloud computing algorithm, and then perform the measurement operation based on the calibrated point cloud computing algorithm.

In an existing method for calibrating an error parameter of a laser radar system, M planar calibration planes are first disposed in a calibration field. The laser radar system scans each planar calibration plane, assigns a measurement value to an error parameter in a point cloud computing algorithm to obtain a detected first point cloud, and fits a plane equation of the M plane calibration planes based on the first point cloud. The error parameter in the point cloud computing algorithm is used as a variable to obtain a corresponding detected second point cloud, and a position of any sampling point in the second point cloud is a function that uses the error parameter as an independent variable. For an accurate error parameter, the following limiting condition needs to be met: The second point cloud meets a plane equation used to describe a corresponding calibration plane. Therefore, in a conventional technology, a cost function is constructed based on a distance from the second point cloud to a plane represented by the fitted plane equation, and a variable of the cost function is the error parameter. Then, the error parameter of the laser radar system is calibrated by calculating an optimal solution of the cost function.

Generally, there is a relatively large difference between an initial value of each error parameter and a true value of each error parameter. Therefore, there is a relatively large difference between a point cloud obtained by setting the error parameter to the initial value and a position of an m$^{th}$ calibration plane, and there is a relatively large difference between a plane described by a plane equation fitted based on the point cloud and a plane of the m$^{th}$ calibration plane. This is not conducive to improvement of point cloud measurement accuracy of the laser radar system.

N Muhammad ; S Lacroix: "Calibration of a Rotating Multi-Beam Lidar", Intelligent Robots and Systems (IROS), 2010 IEEE/RSJ International Conference on, 18 October 2010 (2010-10-18), pages 5648-5653, XP031920639, DOI: 10.1109/IROS.2010.5651382 discloses a technique for the calibration of multi-beam laser scanners.

Faraz M Mirzaei ET AL: "3D Lidar-Camera Intrinsic and Extrinsic Calibration: Observability Analysis and Analytical Least Squares-based Initialization", 1 January 2012 (2012-01-01), XP055124525 discloses an algorithm for joint estimation of both the intrinsic parameters of the Velodyne 3D lidar and the lidar-camera transformation.

WO 2019/032588 A1 discloses perception sensors of a vehicle that can be used for various operating functions of the vehicle.

### SUMMARY

In a first aspect of the present invention there is provided a method according to claim 1. In a second aspect of the present invention there is provided an apparatus according to claim 8. In a third aspect of the present invention there is provided a computer-readable storage medium according to claim 15.

Embodiments of this application provide a method and an apparatus for calibrating a parameter of a laser radar, and the method and the apparatus are used to calibrate a parameter in a point cloud computing algorithm in a laser radar system, to improve point cloud measurement accuracy of the laser radar system.

According to a first aspect, an embodiment of this application provides a method for calibrating a parameter of a laser radar, including: obtaining three-dimensional coordinates, in a same coordinate system, of a plurality of sampling points detected on a calibration plane by a plurality of beams of laser light transmitted by a laser radar system, where the three-dimensional coordinates of the plurality of sampling points are obtained by inputting measurement information of the plurality of sampling points into a point cloud computing algorithm using a first parameter as a variable, three-dimensional coordinates of any one of the plurality of sampling points are a function using the first parameter as an independent variable, and the measurement information of the plurality of sampling points is used to determine target angles and target distances of the plurality of sampling points relative to the laser radar system; determining a predicted value that is of the first parameter and that enables a cost function using the first parameter as an independent variable to have an optimal solution, where the cost function is determined based on the three-dimensional coordinates of the plurality of sampling points and a fitting function for the plurality of sampling points, and the predicted value of the first parameter is used to enable the three-dimensional coordinates of the plurality of sampling points to meet the fitting function; and assigning a value to the first parameter in the point cloud computing algorithm based on the predicted value of the first parameter. In a possible implementation, the fitting function is obtained by approximating or fitting an equation used to represent the calibration plane to the three-dimensional coordinates of the plurality of sampling points, and the equation of the calibration plane is determined based on a shape of the calibration plane.

In the method for calibrating a parameter of a laser radar provided in this embodiment of this application, the cost function used to determine the predicted value of the first parameter is determined based on the three-dimensional coordinates of the sampling points and the fitting function for the sampling points. The fitting function for the plurality of sampling points uses the first parameter as an independent variable, and accuracy of the fitting function is determined by accuracy of the predicted value of the first parameter. Because the predicted value of the first parameter is determined based on the measurement information of the sampling point and the optimal solution of the cost function, a fitted plane corresponding to the fitting function is closer to the calibration plane, and the predicted value of the first parameter is closer to a true value of the first parameter than a preset initial value of the first parameter in a conventional technology. Therefore, the method in this application is conducive to improvement of accuracy of the predicted value of the first parameter. When the predicted value of the first parameter is the true value of the first parameter, the fitted plane corresponding to the fitting function is the calibration plane.

In a possible implementation, the calibration plane is a plane, and the fitting function is a plane equation.

In a possible implementation, the cost function is positively correlated with a first cost function; and the first cost function is determined based on first distances from the plurality of sampling points to a plane represented by the fitting function, and the first distance is a function using the first parameter as an independent variable.

In a possible implementation, the calibration plane includes a first calibration plane and a second calibration plane, the plurality of sampling points include a first sampling point detected on the first calibration plane by the laser radar system and a second sampling point detected on the second calibration plane, and the fitting function includes a first fitting function for the first sampling point and a second fitting function for the second sampling point. The cost function is positively correlated with a second cost function, the second cost function is determined based on the first fitting function, the second fitting function, and a relative position relationship between the first calibration plane and the second calibration plane, and the second cost function uses the first parameter as an independent variable.

In a possible implementation, the relative position relationship is used to indicate that the first calibration plane and the second calibration plane are perpendicular to each other, or is used to indicate that the first calibration plane and the second calibration plane are parallel to each other, or is used to indicate a distance between the first calibration plane and the second calibration plane that are parallel to each other.

In a possible implementation, the first parameter is used to eliminate a computing error of the point cloud computing algorithm.

In a possible implementation, the first parameter includes at least one of a measurement error parameter and a coordinate transformation error parameter, the measurement error parameter is used to eliminate an error of the measurement information of the plurality of sampling points, the coordinate transformation error parameter is used to eliminate an error introduced by a coordinate transformation process, and the coordinate transformation process is used to transform three-dimensional coordinates of sampling points detected by different laser modules in the laser radar system into the same coordinate system.

According to a second aspect, an embodiment of this application provides an apparatus for calibrating a parameter of a laser radar, including: an obtaining module, configured to obtain three-dimensional coordinates, in a same coordinate system, of a plurality of sampling points detected on a calibration plane by a plurality of beams of laser light transmitted by a laser radar system, where the three-dimensional coordinates of the plurality of sampling points are obtained by inputting measurement information of the plurality of sampling points into a point cloud computing algorithm using a first parameter as a variable, three-dimensional coordinates of any one of the plurality of sampling points are a function using the first parameter as an independent variable, and the measurement information of the plurality of sampling points is used to determine target angles and target distances of the plurality of sampling points relative to the laser radar system; a parameter prediction module, configured to determine a predicted value that is of the first parameter and that enables a cost function using the first parameter as an independent variable to have an optimal solution, where the cost function is determined based on the three-dimensional coordinates of the plurality of sampling points and a fitting function for the plurality of sampling points, and the predicted value of the first parameter is used to enable the three-dimensional coordinates of the plurality of sampling points to meet the fitting function; and a calibration module, configured to assign a value to the first parameter in the point cloud computing algorithm based on the predicted value of the first parameter.

In a possible implementation, the calibration plane is a plane, and the fitting function is a plane equation.

In a possible implementation, the cost function is positively correlated with a first cost function; and the first cost function is determined based on first distances from the plurality of sampling points to a plane represented by the fitting function, and the first distance is a function using the first parameter as an independent variable.

In a possible implementation, the calibration plane includes a first calibration plane and a second calibration plane, the plurality of sampling points include a first sampling point detected on the first calibration plane by the laser radar system and a second sampling point detected on the second calibration plane, and the fitting function includes a first fitting function for the first sampling point and a second fitting function for the second sampling point. The cost function is positively correlated with a second cost function, the second cost function is determined based on the first fitting function, the second fitting function, and a relative position relationship between the first calibration plane and the second calibration plane, and the second cost function uses the first parameter as an independent variable.

In a possible implementation, the relative position relationship is used to indicate that the first calibration plane and the second calibration plane are perpendicular to each other, or is used to indicate that the first calibration plane and the second calibration plane are parallel to each other, or is used to indicate a distance between the first calibration plane and the second calibration plane that are parallel to each other.

In a possible implementation, the first parameter is used to eliminate a computing error of the point cloud computing algorithm.

In a possible implementation, the first parameter includes at least one of a measurement error parameter and a coordinate transformation error parameter, the measurement error parameter is used to eliminate an error of the measurement information of the plurality of sampling points, the coordinate transformation error parameter is used to eliminate an error introduced by a coordinate transformation process, and the coordinate transformation process is used to transform three-dimensional coordinates of sampling points detected by different laser modules in the laser radar system into the same coordinate system.

According to a third aspect which is not an embodiment of this application, there is provided a computer device, including a processor and a memory. When running computer instructions stored in the memory, the processor performs the method according to any one of the first aspect or the implementations of the first aspect.

According to a fourth aspect, which is not an embodiment of this application, there is provided a laser radar system, including a laser source, a photodetector, a processor, and a memory. The laser source is configured to generate a plurality of beams of laser light and emit the plurality of beams of laser light to a calibration plane, and the photodetector is configured to detect echo signals of the plurality of beams of laser light. When running computer instructions stored in the memory, the processor performs the method according to any one of the first aspect or the implementations of the first aspect.

According to a fifth aspect, an embodiment of this application provides a computer-readable storage medium including instructions, and when the instructions are run on a computer, the computer is enabled to perform the method according to any one of the first aspect or the implementations of the first aspect.

According to a sixth aspect, which is not an embodiment of this application, there is provided a computer program product including instructions, and when the instructions are run on a computer, the computer is enabled to perform the method according to any one of the first aspect or the implementations of the first aspect.

According to a seventh aspect, which is not an embodiment of this application, there is provides a chip, and the chip includes a processor and a memory. When running a computer program or instructions stored in the memory, the processor implements the method according to any one of the first aspect or the implementations of the first aspect.

## BRIEF DESCRIPTION OF DRAWINGS

FIG. 1a is a schematic diagram of an embodiment of a laser radar system according to the present invention;
FIG. 1b is a schematic diagram of another embodiment of a laser radar system according to the present invention;
FIG. 2 is a schematic diagram of a principle of a point cloud computing algorithm;
FIG. 3a shows a coordinate system that is of a laser radar system and that is constructed by using a start point of a reference laser beam as an origin;
FIG. 3b is a side view of FIG. 3a;
FIG. 3c is a top view of FIG. 3a;
FIG. 4 is a schematic diagram of an existing calibration field and an internal calibration plane;
FIG. 5 is a schematic diagram of an embodiment of a method for calibrating a parameter of a laser radar according to this application;

FIG. 6a is a schematic diagram of a calibration field and an internal calibration plane in this application;

FIG. 6b is a front view that is of a sampling point and that is drawn based on a true value of a point cloud of a calibration plane in FIG. 6a;

FIG. 6c is a side view that is of a sampling point and that is drawn based on a true value of a point cloud of a calibration plane in FIG. 6a;

FIG. 7a to FIG. 7e are successively schematic diagrams of calibration results of error parameters $D_i$, $\Delta\theta_i$, $\Delta\beta_i$, $V_i$, and $H_i$ obtained based on an existing method for calibrating a parameter of a laser radar;

FIG. 8a to FIG. 8e are successively schematic diagrams of calibration results of error parameters $D_i$, $\Delta\theta_i$, $\Delta\beta_i$, $V_i$, and $H_i$ obtained based on a method for calibrating a parameter of a laser radar provided in an embodiment of this application;

FIG. 9 is a schematic diagram of a point cloud of each planar reflector obtained after 0 is assigned to an error parameter in a laser radar system;

FIG. 10 is a schematic diagram of a point cloud of a planar reflector before and after calibration is performed based on a method in this application;

FIG. 11 is a schematic diagram of a structure of an apparatus for calibrating a parameter of a laser radar according to an embodiment of this application; and

FIG. 12 is a schematic diagram of a structure of a computer device according to an embodiment of this application.

## DESCRIPTION OF EMBODIMENTS

The following describes embodiments of this application with reference to the accompanying drawings.

Light detection and ranging (light detection and ranging) is usually represented by an acronym "LiDAR" or a laser radar (laser radar). The light detection and ranging is referred to as a laser radar below. An apparatus such as a three-dimensional object scanner, an automatic or semi-automatic driving vehicle, or a secure camera may use a laser radar system to scan an object.

A laser radar system provided in this application is described below.

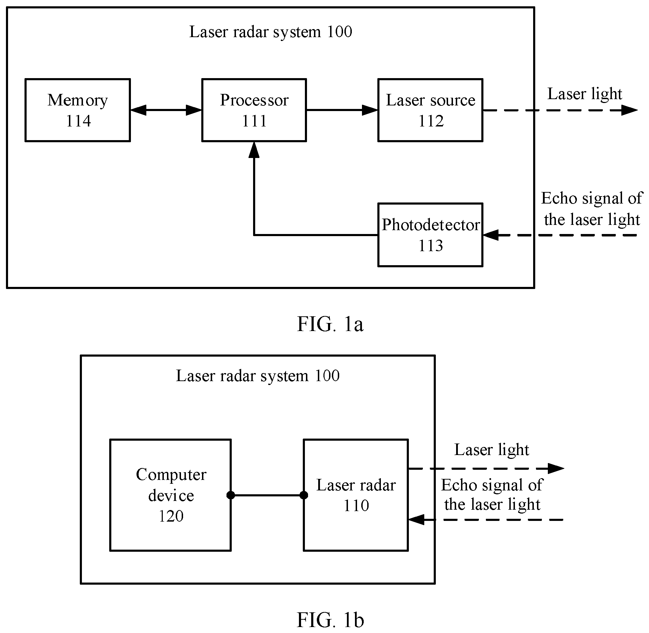

In a possible implementation, the laser radar system may be a single laser radar. Correspondingly, FIG. 1a is a schematic diagram of a structure of a laser radar system according to an embodiment of this application. As shown in FIG. 1a, a laser radar system 100 includes a processor 111, a laser source 112, a photodetector 113, a memory 114, and the like.

The laser source 112 includes one or more lasers (not specifically shown in FIG. 1a). The laser source 112 may generate laser light and emit the laser light to a detection environment. The photodetector 113 is configured to detect an echo signal (or referred to as reflected laser light) of the laser light, and generate and output a data signal based on the received echo signal.

The processor 111 is configured to receive the data signal output by the photodetector 113, and determine, based on the received data signal, measurement information that is of a sampling point and that is detected by the laser light. The measurement information of the sampling point is used to determine a target angle, a target distance, and the like of the sampling point relative to the laser radar system. The processor 111 may further determine a point cloud of the detection environment based on the measurement information of the sampling point, and the point cloud includes three-dimensional coordinates of the sampling point in a coordinate system of the laser radar system, and the like. In a possible implementation, a processor in the processor 111 may be specifically a digital signal processor (digital signal processor, DSP), a field programmable gate array (field programmable gate array, FPGA), a central processing unit (central processing unit, CPU), or another processor.

The laser radar system 100 may further include a memory 114, configured to store an executable program, and the processor 111 may execute the executable program in the memory 114 to obtain the point cloud of the detection environment.

In a possible implementation, the laser radar system 100 may further include a mechanical apparatus (not shown in FIG. 1a). The mechanical apparatus is configured to change an angle at which the laser source 112 emits the laser light, and change an angle at which the photodetector 113 detects the echo signal.

In a possible implementation, the laser radar system may include a computer device and one or more laser radars. All or some functions of the processor 111 in FIG. 1a may be implemented by the computer device (for example, a server, a desktop computer, a laptop computer, or a mobile terminal). Correspondingly, FIG. 1b is another schematic diagram of a structure of a laser radar system according to an embodiment of this application. In an example in FIG. 1b, the laser radar system includes one laser radar. The laser radar system 100 includes a computer device 120 and a laser radar 110. The laser radar 110 includes at least the laser source 112 and the photodetector 113 in the embodiment corresponding to FIG. 1a. The computer device 120 includes at least the processor 111 and the memory 114 in the embodiment corresponding to FIG. 1a. For related descriptions, refer to the foregoing embodiments. Details are not described herein again. The laser radar 110 and the computer device 120 are connected, and may transmit a data signal to each other. For example, the photodetector 113 may send a data signal to the computer device 120 based on the received echo signal, and the computer device 120 may obtain, based on the received data signal, the point cloud detected by the laser radar 110.

The laser radar system shown in FIG. 1a is used as an example. The laser radar system may emit laser light to the detection environment, and detect an echo signal reflected by a sampling point in the detection environment. When an echo signal of a beam of laser light is detected, measurement information of the laser light or measurement information that is of the sampling point and that is detected by the laser light may be calculated. For example, the laser radar system may calculate a distance (referred to as a detection distance of the laser light) between the sampling point and an emission point of the laser light based on flight duration, and the laser radar system may further calculate an emission angle of the laser light, for example, a horizontal exit angle and a vertical exit angle. Then, the laser radar system may input the measurement information (that is, the detection distance and the emission angle) of the laser light into a point cloud computing algorithm to obtain three-dimensional coordinates of each sampling point. The point cloud computing algorithm may be a program pre-stored in the laser radar system, and the program is used to output the three-dimensional coordinates of each sampling point that are detected by the laser radar system.

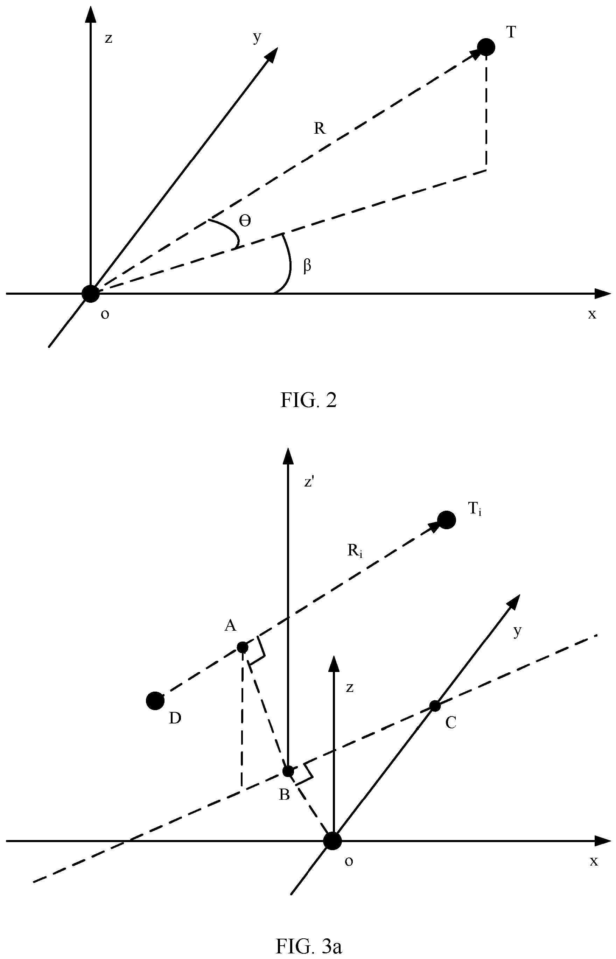

The three-dimensional coordinates are a point that has a specific meaning and that includes three mutually independent variables. The three-dimensional coordinates represent a point in space, and have different expression forms in different three-dimensional coordinate systems. As an example in this embodiment of this application, a three-dimensional coordinate system is a three-dimensional Cartesian coordinate system, and the three-dimensional coordinates are three-dimensional Cartesian coordinates. For example, input of the point cloud computing algorithm includes a horizontal exit angle, a vertical exit angle, and a detection distance of laser light. FIG. 2 is a schematic diagram of a principle that the point cloud computing algorithm is based on. A three-dimensional coordinate system in FIG. 2 is a coordinate system (referred to as a radar coordinate system) of the laser radar system, an origin o of the coordinate system represents an exit position of the laser light in the laser radar system, and a dashed line with an arrow represents laser light emitted from the exit position o. For example, as shown in FIG. 2, a calculation formula of three-dimensional coordinates of a sampling point T is as follows:

$$\begin{cases} x = R \cdot \cos(\theta) \cdot \cos(\beta) \\ y = R \cdot \cos(\theta) \cdot \sin(\beta) \\ z = R \cdot \sin(\theta) \end{cases} \tag{1}$$

$\beta$ is the horizontal exit angle of the laser light, $\theta$ is the vertical exit angle of the laser light, and R is the detection distance of the laser light. In FIG. 2, a length of the dashed line with an arrow is used to represent the detection distance R of the laser light.

However, there is usually an error (referred to as a measurement error) between the three-dimensional coordinates of the sampling point that are obtained by the point cloud computing algorithm and a real position of the sampling point, and a corresponding measurement error is not considered in the formula (1). Consequently, there is a relatively large difference between a measurement position that is of the sampling point and that is calculated by the laser radar system and the real position of the sampling point, and accuracy of a detection result of the laser radar system is reduced. To improve accuracy of a calculation result, a parameter (referred to as an error parameter) that is used to eliminate the corresponding measurement error needs to be introduced into the formula (1).

For example, there are usually the following several measurement errors and corresponding error parameters in the laser radar system:

(1) There is usually a measurement error (specifically referred to as an angle error) in a process in which the laser radar system calculates the emission angle of the laser light. An angle error parameter may be introduced into the formula (1), to eliminate the angle error and obtain an accurate emission angle.

(2) There is usually a measurement error (specifically referred to as a distance error) in a process in which the laser radar system calculates the detection distance of the laser light. A distance error parameter may be introduced into the formula (1), to eliminate the distance error and obtain an accurate detection distance.

(3) Laser radar systems may be classified into a single-beam laser radar system and a multi-beam laser radar system. The single-beam laser radar system generates only one laser scanning line when performing scanning once, and the multi-beam laser radar system may generate a plurality of laser scanning lines when performing scanning once. For a laser radar system corresponding to a multi-module laser radar or a laser radar system including a plurality of laser radars, each module or each laser radar in the laser radar system includes one or more lasers and photodetectors, and usually, may generate a plurality of beams of laser light at a time. Emission angles of lasers in different modules or different laser radars are usually different; for example, vertical exit angles of laser light emitted by different modules or different laser radars are different. Each module or each laser radar may emit laser light to the detection environment, and obtain a measurement position in a coordinate system (a module coordinate system for short) of the corresponding module or laser radar based on the formula (1). An origin of the module coordinate system is usually determined by an exit position of the laser light. Because emission positions of laser light of different modules or laser radars are different, different module coordinate systems usually do not overlap, and one of the module coordinate systems is usually selected as a unified coordinate system (referred to as a radar coordinate system). To calculate a position, in a same coordinate system (referred to as a radar coordinate system), of each sampling point in the detection environment based on measurement information that is of laser light and that is obtained by each module or each laser radar, a module error parameter may be introduced into the point cloud computing algorithm to eliminate a difference (referred to as a module error) between another module coordinate system and the radar coordinate system.

A possible error parameter model of the laser radar system is described below.

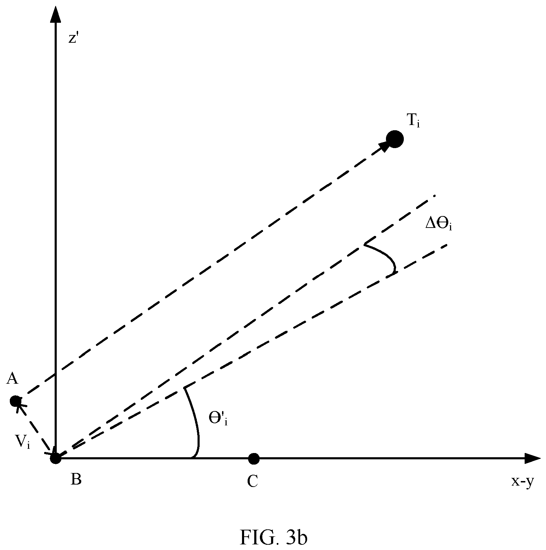

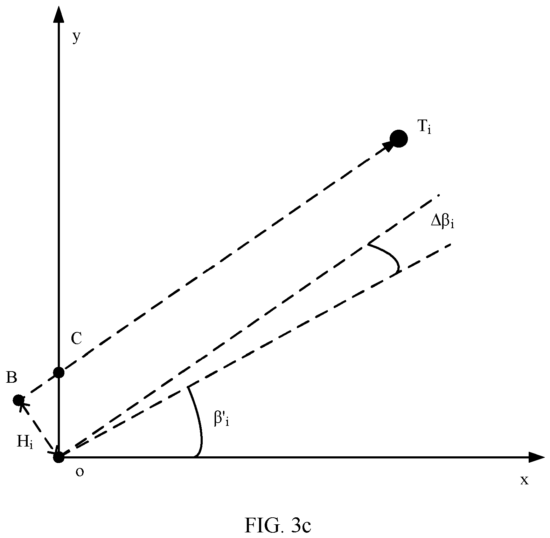

As shown in FIG. 3a, a start point of a reference laser beam is used as an origin o to construct an xyz coordinate system of the laser radar system, where directions of an x-axis and a z-axis are respectively defined by a horizontal exit angle and a vertical exit angle of the laser beam, and a direction of a y-axis is determined by a righthand rule. A projection, in an xy-plane, of a straight line (a dashed line with an arrow) in which an $i^{th}$ ray of laser light (or referred to as an $i^{th}$ beam of laser light) is located is a straight line in which B and C are located; a vertical line passing through the point o is drawn perpendicular to the straight line in which B and C are located, and a foot point is the point B; and a vertical line passing through the point B is drawn perpendicular to the straight line in which the $i^{th}$ ray of laser light is located, and a foot point is a point A. FIG. 3b is a side view of FIG. 3a, and a line-of-sight direction is a direction oB. FIG. 3c is a top view of FIG. 3a, and a line-of-sight direction is a reverse direction of the z-axis.

As shown in FIG. 3a to FIG. 3c, a point cloud computing algorithm of the $i^{th}$ ray of laser light is as follows, to calculate three-dimensional coordinates of a sampling point $T_i$ of the $i^{th}$ ray of laser light in the radar coordinate system.

$$\begin{cases} x_i = (R_i \cdot \cos\theta_i - V_i \cdot \sin\theta_i) \cdot \cos(\beta_i) - H_i \cdot \sin\beta_i; \\ y_i = (R_i \cdot \cos\theta_i - V_i \cdot \sin\theta_i) \cdot \sin(\beta_i) + H_i \cdot \cos\beta_i; \\ z_i = R_i \cdot \sin\theta_i + V_i \cdot \sin\theta_i; \end{cases} \qquad (2)$$

Each parameter is defined as follows:

(1)  $R_i = \dfrac{R'_i}{(1+k)} + \Delta R' + D_i$  represents a true value (or referred to as a corrected value) of a distance from the point A to the sampling point $T_i$.

(2)  $\dfrac{R'_i}{(1+k)} + \Delta R'$  in (1) represents a true value of a distance from a start point (a point D) of the $i^{th}$ ray of laser light (beam) to the sampling point $T_i$, $R'_i$ represents a measurement value of a detection distance of the $i^{th}$ ray of laser light, k and $\Delta R'$ each represent a distance error parameter, k is referred to as a distance correction factor, and $\Delta R'$ is referred to as a distance offset factor.

(3) $D_i$ also represents a distance error parameter, $D_i$ is referred to as a distance compensation factor, an absolute value of $D_i$ represents a length of a line segment DA, $D_i$ is a negative value when the point A is located on the $i^{th}$ ray of laser beam, and $D_i$ is a positive value when the point A is located on a reverse extended line of the $i^{th}$ ray of laser beam.

(4) $V_i$ is a module error parameter, and represents a projection, on a side-view plane, of a vertical distance from the origin o of the radar coordinate system to the $i^{th}$ ray of laser beam, an absolute value of $V_i$ is a length of a line segment AB, $V_i$ is a positive value when a coordinate of the point A on the z-axis is positive, and otherwise, $V_i$ is a negative value.

(5) $\theta_i = \theta'_i + \Delta\theta_i$ represents a true value of a vertical exit angle of the $i^{th}$ ray of laser light, $\theta'_i$ represents a measurement value of the vertical exit angle of the $i^{th}$ ray of laser light, $\Delta\theta_i$ represents an angle error parameter of the vertical exit angle of the $i^{th}$ ray of laser light, and an angle is positive from a line in which a line segment BC is located to a positive axis of the z-axis, and otherwise, is negative.

(6) $H_i$ is a module error parameter, and represents a vertical distance from the origin o to a projection of the $i^{th}$ ray of laser light on an xy-plane, an absolute value of $H_i$ is a length of oB, and $H_i$ is a positive value when the point B is in a quadrant I of the xy-plane of the radar coordinate system, and otherwise, $H_i$ is a negative value.

(7) $\beta_i = \beta'_i + \Delta\beta_i$ represents a true value of a horizontal exit angle of the $i^{th}$ ray of laser light, $\beta'_i$ represents a measurement value of the horizontal exit angle of the $i^{th}$ ray of laser light, $\Delta\beta_i$ represents an angle error parameter of the horizontal exit angle of the $i^{th}$ ray of laser light, and an angle is positive from a positive axis of the x-axis to a positive axis of the y-axis, and otherwise, is negative.

To improve accuracy of the point cloud measured by the laser radar system, before the laser radar system performs a measurement operation, an error parameter in the point cloud computing algorithm of the laser radar system is first calibrated (or be referred to as calibrated).

In the parameters in the formula (2), known parameters are $R'_i$, $\theta'_i$, and $\beta'_i$, and unknown to-be-calibrated error parameters are k, $\Delta R'$, $D_i$, $\Delta\theta_i$, $\Delta\beta_i$, $V_i$, and $H_i$. Point cloud computing algorithms corresponding to laser beams of different modules have same k and same $\Delta R'$, but may have different $D_i$, different $\Delta\theta_i$, different $\Delta\theta_i$, different $V_i$, and different $H_i$. If a quantity of laser light lines is N, in a point cloud computing algorithm of each module in the laser radar system, a quantity of to-be-calibrated error parameters is 5N+2. If a coordinate system of a module in the laser radar system is used as the radar coordinate system, a laser beam emitted by the module is referred to as a reference laser beam, all error parameters $D_i$, $\Delta\theta_i$, $\Delta\beta_i$, $V_i$, and $H_i$ corresponding to the reference laser beam are 0. In the point cloud computing algorithm of each module in the laser radar system, the quantity of to-be-calibrated error parameters is 5N-3.

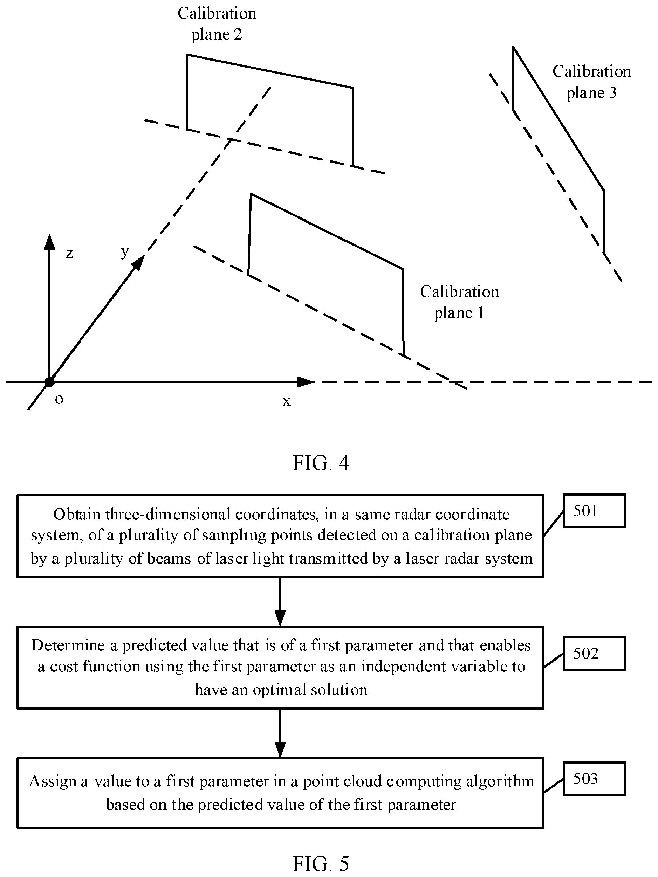

To calibrate the foregoing error parameters in the laser radar system, a method for calibrating a parameter of a laser radar is provided in a conventional technology. As shown in FIG. 4, M planar calibration planes are disposed in a calibration field (for example, a calibration plane 1, a calibration plane 2, and a calibration plane 3 are disposed in FIG. 4). It is assumed that the laser radar system includes I modules, and each module scans each planar calibration plane. It is assumed that in a process in which each module scans a single calibration plane, J beams of laser light are emitted at different positions or angles. In this case, the laser radar system emits M·I·J beams of laser light to the M calibration planes, and detects M·I·J sampling points. M and I are positive integers, and J is a positive integer greater than 2.

The existing method for calibrating a parameter of a laser radar includes the following steps:

(1) To-be-calibrated error parameters k, $\Delta R'$, $D_i$, $\Delta\theta_i$, $\Delta\beta_i$, $V_i$, and $H_i$ are set to 0, and an initial value of a point cloud of the planar calibration plane is calculated based on the formula (2). A point cloud of each planar calibration plane includes positions of I·J sampling points, and a point cloud obtained by the laser radar system includes positions of a total of M·I·J sampling points.

(2) It is assumed that m is any positive integer less than M, and a plane equation used to describe an $m^{th}$ calibration plane is $A_m \cdot x + B_m \cdot y + C_m \cdot z + D = 0$. Planar fitting is performed on an initial value of a point cloud of each planar calibration plane, to obtain fitting plane parameters $A_m$, $B_m$, and $C_m$ in each plane equation.

(3) The to-be-calibrated error parameters k, $\Delta R'$, $D_i$, $\Delta\theta_i$, $\Delta\beta_i$, $V_i$, and $H_i$ are used as independent variables, and a point cloud function is calculated based on the formula (2). The point cloud function includes a position function of the M·I·J sampling points; in other words, a position of each sampling point is a function that uses k, $\Delta R'$, $D_i$, $\Delta\theta_i$, $\Delta\beta_i$, $V_i$, and $H_i$ as independent variables.

(4) A cost function is constructed based on a mean square distance from a sampling point corresponding to each position function in the point cloud function and a plane corresponding to each plane equation:

$$C(k, \Delta R', D_i, \Delta\theta_i, \Delta\beta_i, V_i, H_i) = \sum_{m=1}^{M} \sum_{i=1}^{I} \sum_{j=1}^{J} \frac{(D_{m,i,j})^2}{M \cdot I \cdot J} \tag{3}$$

$D_{m,i,j} = \dfrac{|A_m \cdot x_{m,i,j} + B_m \cdot y_{m,i,j} + C_m \cdot z_{m,i,j} + D|}{\sqrt{A_m{}^2 + B_m{}^2 + C_m{}^2}}$ represents a distance from a sampling point (m, i, j) in the point cloud to a plane corresponding to the plane equation of the $m^{th}$ calibration plane.

Based on a criterion to enable the cost function shown in the formula (3) to be minimum, the error parameters k, $\Delta R'$, $D_i$, $\Delta\theta_i$, $\Delta\beta_i$, $V_i$, and $H_i$ are estimated through value optimization.

A theoretical constraint corresponding to the formula (3) is as follows: In a point cloud function of the $m^{th}$ calibration plane, a sampling point corresponding to each position function is located in the $m^{th}$ calibration plane.

However, an actual constraint corresponding to the formula (3) is: In the point cloud function of the $m^{th}$ calibration plane, a sampling point corresponding to each position function is located in a fitted plane of the $m^{th}$ calibration plane. A point cloud based on which the fitted plane of the $m^{th}$ calibration plane is determined is obtained by setting each error parameter in the formula (2) to an initial value. Generally, there is a relatively large difference between an initial value of each error parameter and a true value of each error parameter. Therefore, there is a relatively large difference between a point cloud obtained by setting the error parameter to the initial value and a position of the $m^{th}$ calibration plane, and there is a relatively large difference between a plane described by a plane equation fitted based on the point cloud and the plane of the $m^{th}$ calibration plane. It can be learned that, after the existing laser radar system calibrates each error parameter by calculating an optimal solution of the cost function of the formula (3), there is a relatively large difference between the obtained point cloud and positions of M calibration planes, and calibration accuracy for the error parameter is relatively poor, and consequently, accuracy of the point cloud detected by the laser radar system is reduced.

To improve calibration accuracy for an error parameter in a laser radar system, this application provides another embodiment of a method for calibrating a parameter of a laser radar. This embodiment is described below.

FIG. 5 is a schematic diagram of an embodiment of a method for calibrating a parameter of a laser radar according to this application. As shown in FIG. 5, the laser radar system shown in FIG. 1a is used as an example. The method for calibrating a parameter of a laser radar in this embodiment of this application may include the following steps.

501: Obtain three-dimensional coordinates, in a same radar coordinate system, of a plurality of sampling points detected on a calibration plane by a plurality of beams of laser light transmitted by the laser radar system.

In a process of calibrating a parameter (referred to as a first parameter) in a point cloud computing algorithm, a laser source 112 in the laser radar system 100 may emit a plurality of beams of laser light to one or more calibration planes disposed in a calibration field, a photodetector 113 in the laser radar system 100 receives echo signals of the plurality of beams of laser light, and a processor 111 obtains measurement information of a plurality of sampling points detected on the calibration plane by the plurality of beams of laser light. Measurement information of any one of the plurality of sampling points is used to determine a target angle (for example, $\theta'_i$ and $\beta'_i$ in the foregoing error parameter model) and a target distance (for example, $R'_i$ in the foregoing error parameter model) of the sampling point relative to the laser radar system 100.

A program of a point cloud computing algorithm is stored in the laser radar system. Input of the program includes measurement information of the sampling point, and output includes three-dimensional coordinates of the sampling point. After obtaining the measurement information of the plurality of sampling points, the processor 111 may execute the point cloud computing algorithm based on the measurement information of the plurality of sampling points by using the first parameter in the point cloud computing algorithm as a variable, to obtain three-dimensional coordinates of the plurality of sampling points in a same radar coordinate system. Three-dimensional coordinates of any one of the plurality of sampling points are a function that using the first parameter as an independent variable. Then, an apparatus for calibrating a parameter of a laser radar obtains the three-dimensional coordinates of the plurality of sampling points.

502: Determine a predicted value that is of the first parameter and that enables a cost function using the first parameter as an independent variable to have an optimal solution.

After obtaining the three-dimensional coordinates of the plurality of sampling points, the apparatus for calibrating a parameter of a laser radar may determine the value that is of the first parameter and that enables the cost function using the first parameter as an independent variable to have the optimal solution. For ease of description, the value corresponding to the first parameter when the cost function has the optimal solution is referred to as the predicted value of the first parameter.

The cost function is determined based on the three-dimensional coordinates of the plurality of sampling points and a fitting function for the plurality of sampling points. In addition, when the three-dimensional coordinates of the plurality of sampling points meet the fitting function, the cost function has the optimal solution; in other words, the predicted value of the first parameter is used to enable the three-dimensional coordinates of the plurality of sampling points to meet the fitting function.

In a possible implementation, the fitting function for the plurality of sampling points is obtained by approximating or fitting an equation used to represent the calibration plane to the three-dimensional coordinates of the plurality of sampling points. In a possible implementation, the equation used to represent the calibration plane is determined based on a surface shape of the calibration plane. Calibration planes with a same surface shape may have a same equation. For example, an equation used to indicate a planar calibration plane is a plane equation. The equation used to indicate the calibration plane includes a to-be-determined parameter, and a value of the to-be-determined parameter is determined by a position, an angle, and the like of the calibration plane relative to the laser radar system, or is determined by approaching or fitting three-dimensional coordinate points of a plurality of sampling points on the calibration plane.

503: Assign a value to a first parameter in a point cloud computing algorithm based on the predicted value of the first parameter.

After determining the predicted value of the first parameter, the apparatus for calibrating a parameter of a laser radar assigns a value to the first parameter in the point cloud computing algorithm based on the predicted value of the first parameter, to calibrate the first parameter in the point cloud computing algorithm.

After calibrating the first parameter in the point cloud computing algorithm, the laser radar system 100 may emit laser light to a detection environment, and input detected measurement information of the sampling point into the point cloud computing algorithm based on a detected echo signal of the laser light to obtain a point cloud of the detection environment.

In a possible implementation, the first parameter is used to eliminate a computing error of the point cloud computing algorithm, so that the processor obtains real three-dimensional coordinates of the sampling point based on the measurement information of the sampling point and the point cloud computing algorithm.

For example, the first parameter includes at least one of a measurement error parameter and a coordinate transformation error parameter.

The measurement error parameter is used to eliminate errors of the measurement information of the plurality of sampling points, for example, the foregoing angle error parameter and the distance error parameter. More specifically, the angle error parameter may be $\Delta\theta_i$, $\Delta\beta_i$, and the like in the foregoing error parameter model, and the distance error parameter may be k, $\Delta R'$, $D_i$, and the like in the foregoing error parameter model.

The coordinate transformation error parameter is used to eliminate an error introduced by a coordinate transformation process. The coordinate transformation process is used to transform three-dimensional coordinates of sampling points detected by different laser modules in the laser radar system into a same radar coordinate system. The coordinate transformation error parameter may be the foregoing module error parameter, and more specifically, may be $V_i$, $H_i$, and the like in the foregoing error parameter model.

The true value of the first parameter usually changes with use of the laser radar system. Such change is generally random and difficult to predict. Therefore, to ensure accuracy of the point cloud detected by the laser radar system, the first parameter in the point cloud computing algorithm needs to be regularly calibrated.

The cost function used to determine the predicted value of the first parameter is determined based on the three-dimensional coordinates of the sampling point and an equation of a fitted plane of the sampling point. In a conventional technology, a fitting function is determined based on a preset initial value of the first parameter, and the initial value of the first parameter is a fixed value. However, because the true value of the first parameter usually changes with use of the laser radar system, a difference between the initial value of the first parameter and the true value of the first parameter is usually relatively large, and consequently, a difference between the fitted plane and the calibration plane is relatively large, and accuracy of the predicted value of the first parameter is relatively low. In the method for calibrating a parameter of a laser radar provided in this embodiment of this application, the cost function used to determine the predicted value of the first parameter is determined based on the three-dimensional coordinates of the sampling points and the fitting function for the sampling points. The fitting function for the plurality of sampling points uses the first parameter as an independent variable, and accuracy of the fitting function is determined by accuracy of the predicted value of the first parameter. Because the predicted value of the first parameter is determined based on the measurement information of the sampling point and the optimal solution of the cost function, a fitted plane corresponding to the fitting function is closer to the calibration plane, and the predicted value of the first parameter is closer to the true value of the first parameter than a preset initial value of the first parameter in the conventional technology. Therefore, the method in this application is conducive to improvement of accuracy of the predicted value of the first parameter. When the predicted value of the first parameter is the true value of the first parameter, the fitted plane corresponding to the fitting function is the calibration plane.

In a possible implementation, the disposed calibration plane may be a plane, and the fitting function may be a plane equation. For example, a form of the plane equation may be, for example, $A_m \cdot x + B_m \cdot y + C_m \cdot z + D = 0$, where at least one parameter in $A_m$, $B_m$, $C_m$, and $D$ uses the first parameter as an independent variable.

In a possible implementation, the cost function is positively correlated with a first cost function; and the first cost function is determined based on first distances from the plurality of sampling points to a plane represented by the fitting function. Because the three-dimensional coordinates of the plurality of sampling points and the fitting function use the first parameter as an independent variable, the first distance is a function using the first parameter as an independent variable.

It is assumed that N calibration planes may be disposed in the calibration field, and N is a positive integer. In this case, the plurality of sampling points detected by the plurality of beams of laser light emitted by the laser radar system are distributed on the N calibration planes, the fitting function for the plurality of sampling points includes N fitting functions corresponding to the N calibration planes, and each fitting function is determined based on three-dimensional coordinates of sampling points distributed on a corresponding calibration plane.

For example, two calibration planes are disposed in the calibration field. For ease of description, the two calibration planes are referred to as a first calibration plane and a second calibration plane. In this case, the plurality of sampling points detected by the plurality of beams of laser light include a plurality of sampling points (referred to as first sampling points) detected on the first calibration plane and a plurality of sampling points (referred to as second sampling points) detected on the second calibration plane, and the fitting function includes a first fitting function for the first sampling points and a second fitting function for the second sampling points.

In a possible implementation, the cost function is positively correlated with a second cost function, and the second cost function is determined based on the first fitting function, the second fitting function, and a relative position relationship between the first calibration plane and the second calibration plane. Because the first fitting function and the second fitting function use the first parameter as an independent variable, the second cost function uses the first parameter as an independent variable.

In a possible implementation, both the first calibration plane and the second calibration plane are planes. Therefore, the first calibration plane and the second calibration plane may be respectively referred to as a first calibration plane and a second calibration plane.

In a possible implementation, the relative position relationship between the first calibration plane and the second calibration plane is used to indicate that the first calibration plane and the second calibration plane are perpendicular to each other, or is used to indicate that the first calibration plane and the second calibration plane are parallel to each other, or is used to indicate a distance between the first calibration plane and the second calibration plane that are parallel to each other.

A possible specific embodiment of the method for calibrating a parameter of a laser radar in this application is described below.

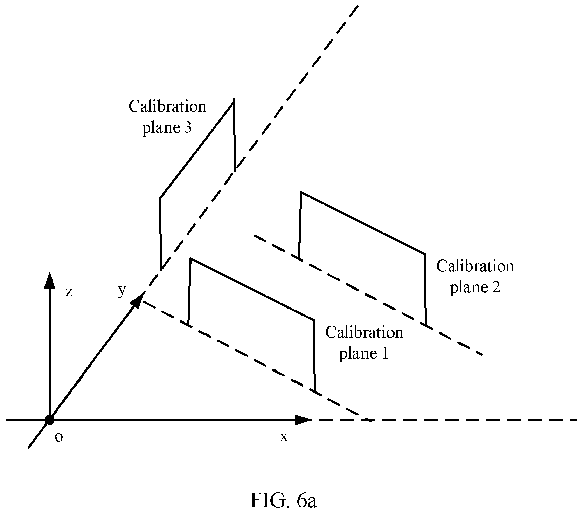

As shown in FIG. 6a, it is assumed that a calibration field and an internal calibration plane are set in the following manner:

1. A wide calibration field facilitates extraction of a point cloud on the calibration plane, for example, a size of the calibration field is not less than 10 m×10 m.

2. M calibration planes are disposed in the calibration field, for example, M is not less than 10.

3. A size of the calibration plane is not less than 1 m×1 m, and a height of the calibration plane is adjustable. An adjustment range is not less than 1 m, so that all laser beams can receive an echo.

4. A pitch angle of the calibration plane is adjustable, and an adjustment range is, for example, between -60° and 60°.

5. A surface (referred to as a surface of the calibration plane for short) that is of each calibration plane and that faces the laser radar system is a plane, and reflectivity of the surface is uniform.

6. A surface of a calibration plane 1 and a surface of a calibration plane 2 are set to be parallel to each other, and a distance between the two surfaces is measured. It is assumed that the distance is D, and distance measurement precision is 1 mm.

7. A surface of a calibration plane 3 is set to a surface perpendicular to the planar calibration plane 1.

8. Positions of other M-3 calibration planes are set, so that positions of different calibration planes are different, and normal vectors of surfaces of different calibration planes are different.

FIG. 6a shows only three calibration planes (the calibration plane 1, the calibration plane 2, and the calibration plane 3), and the other M-3 calibration planes are not shown. Positions and angles of the other M-3 calibration planes in the calibration field are not limited in this embodiment of this application. Positions of M calibration planes are different, or angles are different, or both positions and angles are different. Calibration planes in the calibration field may be set not at the same time, but in sequence. For example, first, one or more calibration planes are disposed in the calibration field, and the disposed calibration planes are scanned by using the laser radar system. Then, the calibration planes in the calibration field are retrieved, and another calibration plane is disposed. Alternatively, a position and/or an angle of the calibration plane in the calibration field are/is changed, and the newly disposed calibration plane is scanned by using the laser radar system until M calibration planes at different positions and/or angles are scanned.

After the calibration plane in the calibration field is set in the foregoing manner, the laser radar system may be operated to emit laser light, a surface of each calibration plane in the calibration field is scanned, and an echo signal reflected by the surface of each calibration plane is detected to obtain measurement information of each laser light. The measurement information includes a measurement value $R'_i$ of a detection distance, a measurement value $\theta'_i$ of a vertical angle, and a measurement value $\beta'_i$ of a horizontal angle. It is assumed that the laser radar system includes I modules, and each module scans each planar calibration plane. It is assumed that in a process in which each module scans a single calibration plane, J beams of laser light are emitted at different positions or angles. In this case, the laser radar system emits M·I·J beams of laser light to the M calibration planes, and detects M·I·J sampling points.

The laser radar system may be set to a calibration mode. Specifically, the first parameter in the point cloud computing algorithm in the processor may be set to a variable, and then three-dimensional coordinates of a sampling point detected by each laser light are obtained based on measurement information of each laser light and the point cloud computing algorithm.

The foregoing error parameter model is still used as an example, and it is assumed that the first parameter in the point cloud computing algorithm includes k, $\Delta R'$, $D_i$, $\Delta\theta_i$, $\Delta\beta_i$, $V_i$, and $H_i$.

The apparatus for calibrating a parameter of a laser radar estimates the error parameters k, $\Delta R'$, $D_i$, $\Delta\theta_i$, $\Delta\beta_i$, $V_i$, and $H_i$ by solving an optimal solution of a cost function shown by the following formula:

$$\{\Delta R'^*, \ k^*, \ \Delta D_i^*, \ V_i^*, \ \Delta\theta_i^*, \ H_i^*, \ \Delta\beta_i^*\}=$$

$$\underset{\Delta R', k, \Delta D_i, \ V_i, \ \Delta\theta_i, H_i, \Delta\beta_i}{\arg\min} F_M \cdot (1 + F_P + F_R + F_V) \tag{4}$$

The cost function corresponding to the formula (4) is determined based on the three-dimensional coordinates of the sampling point that are obtained by the point cloud computing algorithm and a fitting function for the sampling points on the M calibration planes. Specifically, the cost function corresponding to the formula (4) is positively correlated with functions $F_M$, $F_P$, $F_R$, and $F_V$. The four functions are separately described below.

$F_M$ is a cost function constructed based on plane limiting.

$$F_M = \sum_{m=1}^{M} \sum_{i=1}^{I} \sum_{j=1}^{J} \frac{(A_m \cdot x_{m,i,j} + B_m \cdot y_{m,i,j} - z_{m,i,j} + C_m)^2}{A_m^2 + B_m^2 + 1} \tag{5}$$

In the formula (5), $(x_{m,i,j}, y_{m,i,j}, z_{m,i,j})$ represents a position of a sampling point detected by laser light (m, i, j). The position may be obtained by using the formula (2), and use parameters $\Delta R'$, k, $D_i$, $V_i$, $\Delta\theta_i$, $H_i$, and $\Delta\beta_i$ in the formula (2) as variables. Therefore, the position of the sampling point is a function (or referred to as a position function) that uses $\Delta R'$, $k$, $D_i$, $V_i$, $\Delta\theta_i$, $H_i$, and $\Delta\beta_i$ as independent variables.

$A_m \cdot x + B_m \cdot y - z + C_m = 0$ is a fitting function for a sampling point on an $m^{th}$ calibration plane, or a plane equation that uses the first parameter as a variable. Parameters $A_m$, $B_m$, and $C_m$ in the plane equation are calculated based on a least square criterion and three-dimensional coordinates of the sampling point on the $m^{th}$ calibration plane. An expression of $A_m$, $B_m$, and $C_m$ is as follows:

$$\begin{bmatrix} A_m \\ B_m \\ C_m \end{bmatrix} = P \cdot Q \tag{6}$$

P is used to represent the following matrix:

$$\begin{bmatrix} \sum_{i=1}^{I}\sum_{j=1}^{J} x_{m,i,j}{}^2 & \sum_{i=1}^{I}\sum_{j=1}^{J} x_{m,i,j} \cdot y_{m,i,j} & \sum_{i=1}^{I}\sum_{j=1}^{J} x_{m,i,j} \\ \sum_{i=1}^{I}\sum_{j=1}^{J} x_{m,i,j} \cdot y_{m,i,j} & \sum_{i=1}^{I}\sum_{j=1}^{J} y_{m,i,j}{}^2 & \sum_{i=1}^{I}\sum_{j=1}^{J} y_{m,i,j} \\ \sum_{i=1}^{I}\sum_{j=1}^{J} x_{m,i,j} & \sum_{i=1}^{I}\sum_{j=1}^{J} y_{m,i,j} & I \cdot J \end{bmatrix}^{-1} .$$

Q is used to represent the following matrix: $\begin{bmatrix} \sum_{i=1}^{I}\sum_{j=1}^{J} x_{m,i,j} \cdot z_{m,i,j} \\ \sum_{i=1}^{I}\sum_{j=1}^{J} y_{m,i,j} \cdot z_{m,i,j} \\ \sum_{i=1}^{I}\sum_{j=1}^{J} z_{m,i,j} \end{bmatrix} .$

$F_P$ in the formula (4) is a cost function that is constructed in parallel based on the surface of the calibration plane 1 and the surface of the calibration plane 2.

$$F_P = (A_1 - A_2)^2 + (B_1 - B_2)^2 \tag{7}$$

$F_R$ in the formula (4) is a cost function that is constructed based on the distance between the surface of the calibration plane 1 and the surface of the calibration plane 2.

$$F_R = \left[ \frac{(C_1 - C_2)^2}{2 \cdot (1 + A_1{}^2 + B_1{}^2)} + \frac{(C_1 - C_2)^2}{2 \cdot (1 + A_2{}^2 + B_2{}^2)} - D^2 \right]^2 \tag{8}$$

$F_V$ in the formula (4) is a cost function that is constructed vertically based on the surface of the calibration plane 1 and the surface of the calibration plane 3.

$$F_V = (A_1 \cdot A_3 + B_1 \cdot B_3 + 1)^2 \tag{9}$$

Beneficial effects of the specific embodiment of this application are analyzed below.

(1) A difference between a plane corresponding to the plane equation $A_m \cdot x + B_m \cdot y - z + C_m = 0$ and the surface of the $m^{th}$ calibration plane is determined by accuracy of $A_m$, $B_m$, and $C_m$, and the accuracy of $A_m$, $B_m$, and $C_m$ is determined by accuracy of estimated values of $\Delta R'$, $k$, $D_i$, $V_i$, $\Delta\theta_i$, $H_i$, and $\Delta\beta_i$. In the conventional technology in which a parameter in the plane equation is determined by initial values of $\Delta R'$, $k$, $\Delta D_i$, $V_i$, $\Delta\theta_i$, $H_i$, and $\Delta\beta_i$. By contrast, the estimated values of $\Delta R'$, $k$, $D_i$, $V_i$, $\Delta\theta_i$, $H_i$, and $\Delta\beta_i$ obtained in this embodiment of this application are obtained by solving an optimization problem, and are closer to true values of $\Delta R'$, $k$, $D_i$, $V_i$, $\Delta\theta_i$, $H_i$, and $\Delta\beta_i$ than the initial values of $\Delta R'$, $k$, $D_i$, $V_i$, $\Delta\theta_i$, $H_i$, and $\Delta\beta_i$. Therefore, this embodiment of this application helps improve the accuracy of $A_m$, $B_m$, and $C_m$, reduce the difference between the plane corresponding to the plane equation $A_m \cdot x + B_m \cdot y - z + C_m = 0$ and the surface of the $m^{th}$ calibration plane, improve calibration accuracy for an error parameter of the laser radar system, and further improve accuracy of the point cloud detected by the laser radar system.

(2) There are a large quantity of to-be-calibrated error parameters in the cost function, and in the conventional technology, only a plane limiting condition is used to construct the cost function, to optimize the error parameter of the laser radar system, and consequently, an optimization process is prone to running into a local optimal solution. In this embodiment of this application, a single plane limiting condition used in the optimization process is extended to combined limiting conditions, including a limiting condition in which a point cloud is in a plane, a limiting condition in which planes are parallel, a limiting condition in which planes are perpendicular, and a limiting condition in which planes are separated from each other. In this way, a requirement on precision of an initial value of the error parameter is relaxed, and this helps enable the optimization process to have a global optimal solution.

Effects of this embodiment of this application are verified below separately by using a simulation experiment and an actual detection result of the laser radar system.

1. First, an advantage of this embodiment of this application compared with the conventional technology is described by using a simulation result. Simulation parameters are as follows:

The surface of the calibration plane is a plane, a quantity of laser light rays is 32, a vertical field-of-view range is 30° to 61°, a vertical exit angle spacing is 1°, distribution of measurement errors of a vertical exit angle is Gaussian distribution, a mean value is 0, a standard deviation is 0.5°, a horizontal field-of-view range is between 10° and 61°, a horizontal exit angle spacing is 0.2°, distribution of measurement errors of a horizontal exit angle is Gaussian distribution, a mean value is 0, a standard deviation is 0.125°, a distance offset factor $\Delta R'$ is 0.2 m, and a distance correction factor k is 0.001.

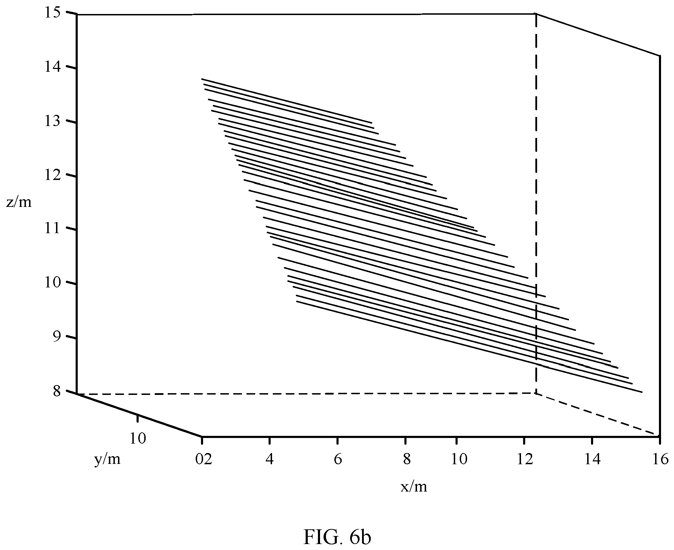

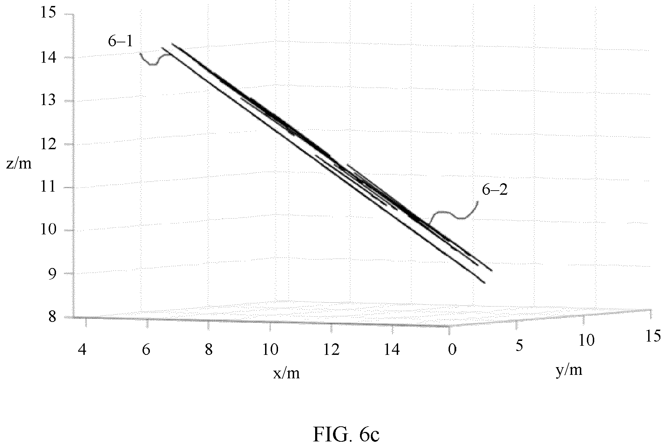

FIG. 6b is a front view that is of a sampling point on a calibration plane and that is drawn based on a true value of a point cloud of a calibration plane in FIG. 6a. FIG. 6c is a front view that is of a sampling point on a calibration plane and that is drawn based on a true value of a point cloud of a calibration plane in FIG. 6a. The front view that is of the sampling point and that is drawn based on the true value of the point cloud of the calibration plane is shown by a straight line 6-1 in FIG. 6c, and a side view that is of a sampling point and that is drawn based on a predicted value of a point cloud calculated when an error parameter is unknown is shown by a line segment set 6-2 in FIG. 6c. It can be learned from FIG. 6c that when the error parameter is unknown, a point cloud used to describe a sampling point on the calibration plane is misplaced, and a thickness of the point cloud used to describe the calibration plane significantly increases. Consequently, accuracy of a point cloud obtained by the laser radar system is reduced.

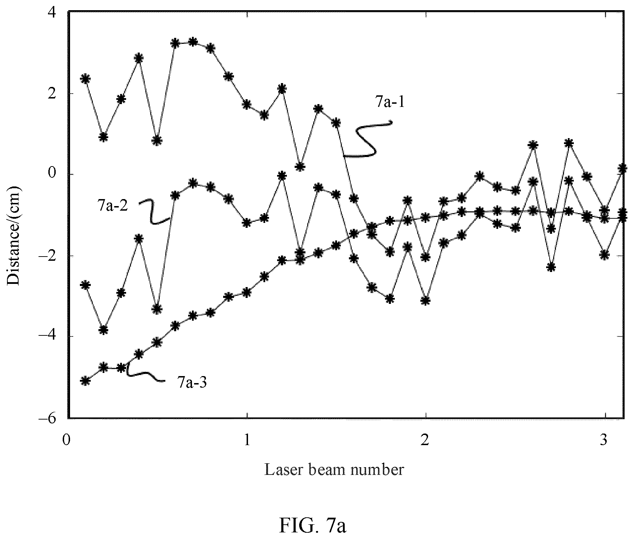

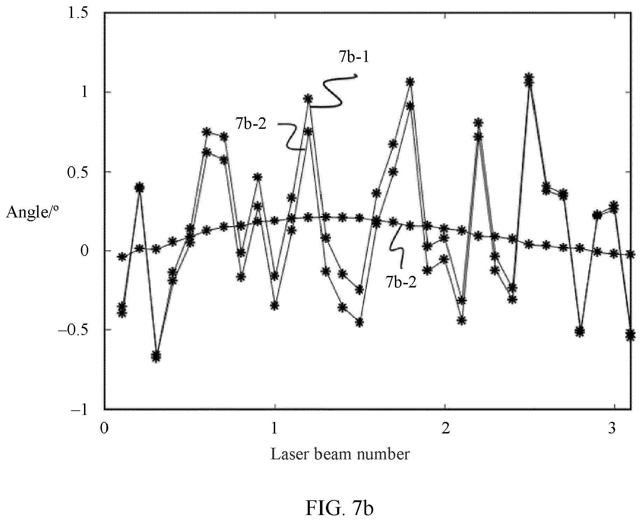

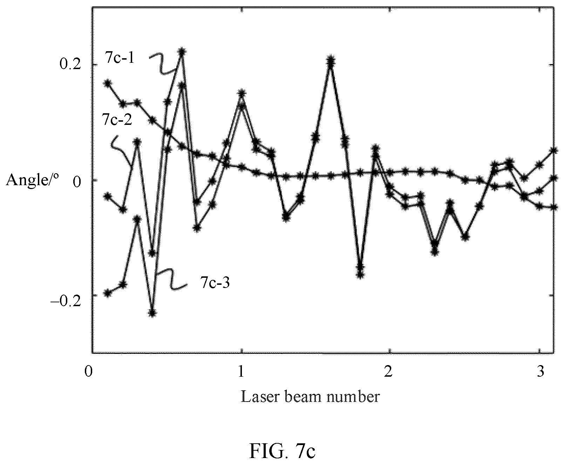

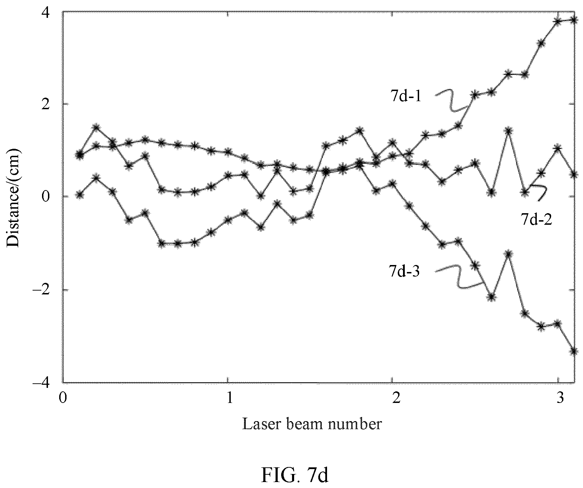

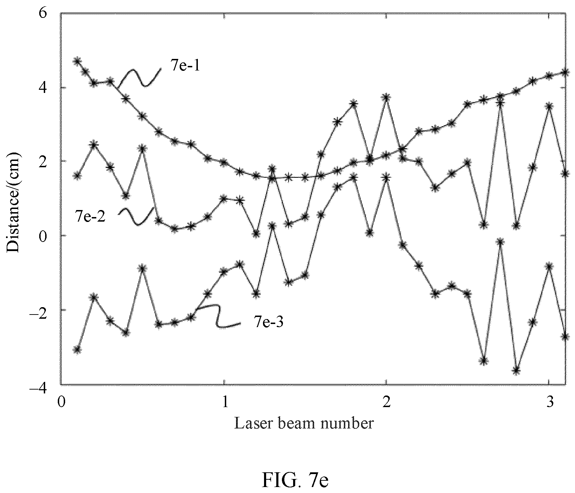

FIG. 7a to FIG. 7e successively show calibration results of error parameters $D_i$, $\Delta\theta_i$, $\Delta\beta_i$, $V_i$, and $H_i$ obtained based on an existing method for calibrating a parameter of a laser radar. In FIG. 7a, a vertical coordinate of a point in a fold line 7a-1 represents a predicted value of $D_i$, a vertical coordinate of a point in a fold line 7a-2 represents a true value of $D_i$, and a vertical coordinate of a point in a fold line 7a-3 represents a calibration error (that is, a difference between the true value and the predicted value) of $D_i$. In FIG. 7b, a vertical coordinate of a point in a fold line 7b-1 represents a true value of $\Delta\theta_i$, a vertical coordinate of a point in a fold line 7b-2 represents a predicted value of $\Delta\theta_i$, and a vertical coordinate of a point in a fold line 7b-3 represents a calibration error (that is, a difference between the true value and the predicted value) of $\Delta\theta_i$. In FIG. 7c, a vertical coordinate of a point in a fold line 7c-1 represents a calibration error (that is, a difference between a true value and a predicted value) of $\Delta\beta_i$, a vertical coordinate of a point in a fold line 7c-2 represents a true value of $\Delta\beta_i$, and a vertical coordinate of a point in a fold line 7c-3 represents a predicted value of $\Delta\beta_i$. In FIG. 7d, a vertical coordinate of a point in a fold line 7d-1 represents a calibration error (that is, a difference between a true value and a predicted value) of $V_i$, a vertical coordinate of a point in a fold line 7d-2 represents a true value of $V_i$, and a vertical coordinate of a point in a fold line 7d-3 represents a predicted value of $V_i$. In FIG. 7e, a vertical coordinate of a point in a fold line 7e-1 represents a calibration error (that is, a difference between a true value and a predicted value) of $H_i$, a vertical coordinate of a point in a fold line 7e-2 represents a true value of $H_i$, and a vertical coordinate of a point in a fold line 7e-3 represents a predicted value of $H_i$.

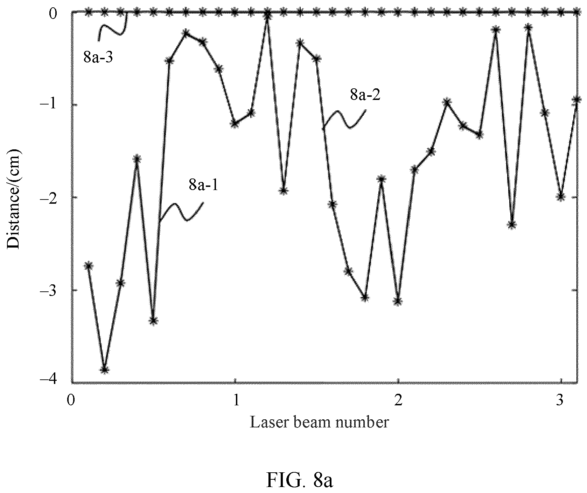

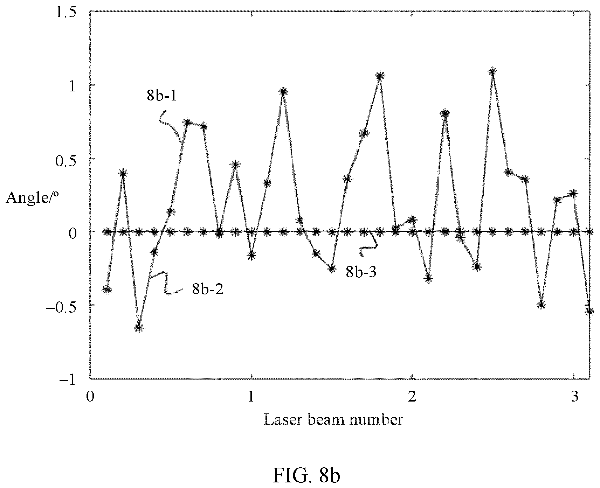

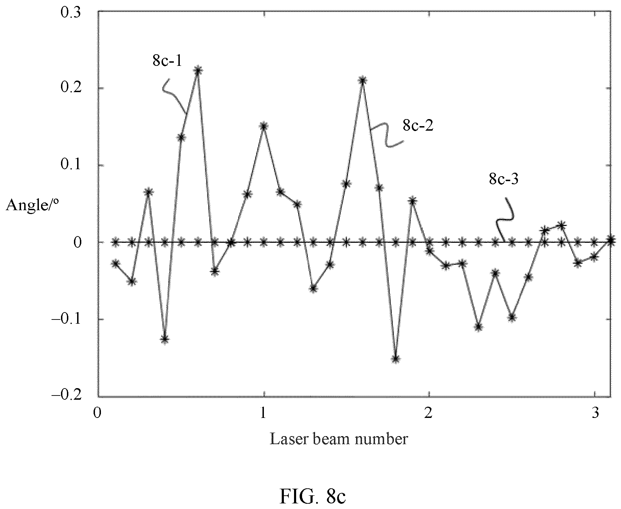

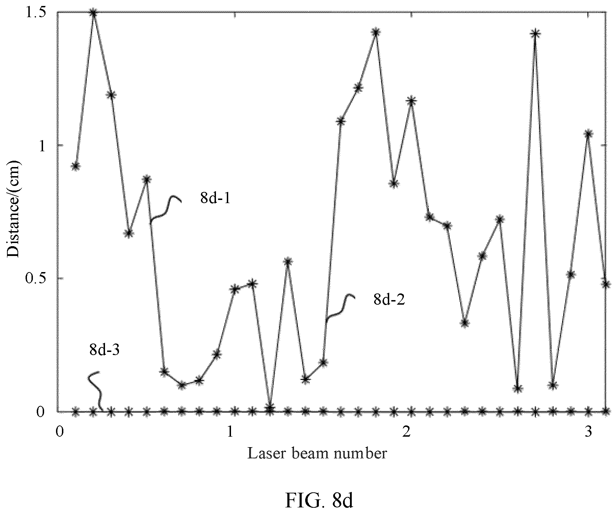

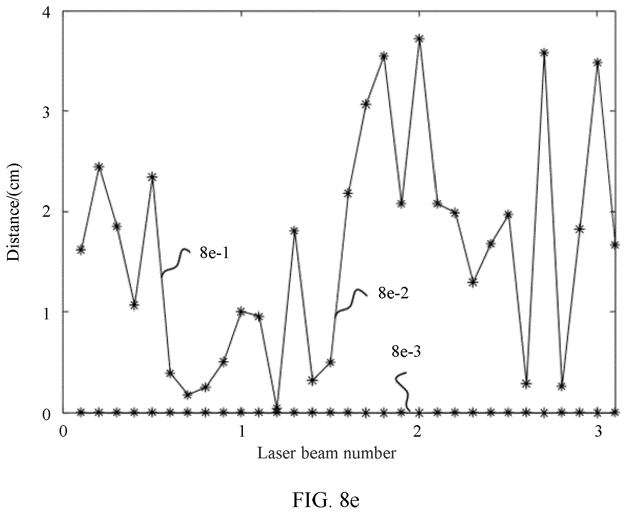

FIG. 8a to FIG. 8e successively show calibration results of error parameters $D_i$, $\Delta\theta_i$, $\Delta\beta_i$, $V_i$, and $H_i$ obtained based on the method for calibrating a parameter of a laser radar provided in embodiments of this application. In FIG. 8a, a vertical coordinate of a point in a fold line 8a-1 represents a predicted value of $D_i$, a vertical coordinate of a point in a fold line 8a-2 represents a true value of $D_i$, the point in the fold line 8a-1 and the point in the fold line 8a-2 overlap, and a vertical coordinate of a point in a fold line 8a-3 represents a calibration error (that is, a difference between the true value and the predicted value) of $D_i$. In FIG. 8b, a vertical coordinate of a point in a fold line 8b-1 represents a true value of $\Delta\theta_i$, a vertical coordinate of a point in a fold line 8b-2 represents a predicted value of $\Delta\theta_i$, the point in the fold line 8b-1 and the point in the fold line 8b-2 overlap, and a vertical coordinate of a point in a fold line 8b-3 represents a calibration error (that is, a difference between the true value and the predicted value) of $\Delta\theta_i$. In FIG. 8c, a vertical coordinate of a point in a fold line 8c-1 represents a true value of $\Delta\beta_i$, a vertical coordinate of a point in a fold line 8c-2 represents a predicted value of $\Delta\beta_i$, the point in the fold line 8c-1 and the point in the fold line 8c-2 overlap, and a vertical coordinate of a point in a fold line 8c-3 represents a calibration error (that is, a difference between the true value and the predicted value) of $\Delta\beta_i$. In FIG. 8d, a vertical coordinate of a point in a fold line 8d-1 represents a true value of $V_i$, a vertical coordinate of a point in a fold line 8d-2 represents a predicted value of $V_i$, the point in the fold line 8d-1 and the point in the fold line 8d-2 overlap, and a vertical coordinate of a point in a fold line 8d-3 represents a calibration error (that is, a difference between the true value and the predicted value) of $V_i$. In FIG. 8e, a vertical coordinate of a point in a fold line 8e-1 represents a true value of $H_i$, a vertical coordinate of a point in a fold line 8e-2 represents a predicted value of $H_i$, the point in the fold line 8e-1 and the point in the fold line 8e-2 overlap, and a vertical coordinate of a point in a fold line 8e-3 represents a calibration error (that is, a difference between the true value and the predicted value) of $H_i$.

It can be learned by comparing FIG. 7a to FIG. 7e with FIG. 8a to FIG. 8e that calibration accuracy of the solution of the present invention is far better than that of the solution in the conventional technology.

A calibration effect is quantitatively evaluated by using a test plane. A normal vector of the test plane is (2, 1, 4), the test plane passes through a point (10 m, 10 m, 10 m), and a mean square distance of a point cloud relative to the test plane is shown in Table 1. Apparently, a position of the point cloud is more accurate after calibration in this solution.

Table 1

|  | Before calibration | After calibration in the conventional technology | After calibration in this solution |
|---|---|---|---|
| Relative to a real plane | 23.2 cm | 3.98 cm | 0.07 cm |
| Relative to a fitted plane | 3 cm | 0.43 cm | 0.01 cm |

2. Actual data processing result

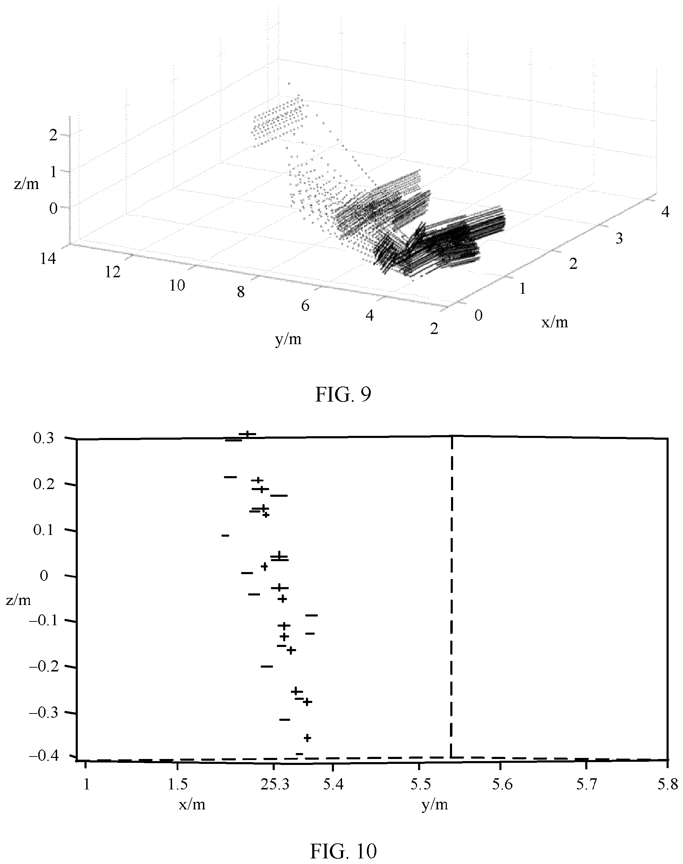

The solution of the present invention is verified based on actual data of the laser radar system, and the laser radar system is calibrated by using 14 planar reflectors of 1 m×1 m and one wall surface as planar calibration planes. 0 is assigned to an error parameter in the laser radar system to obtain a point cloud of each planar calibration plane, as shown in FIG. 9.

Because an initial value of an error parameter of a used prototype of the laser radar system is unknown, the prototype of the laser radar system cannot be calibrated in the conventional technology based on an experimental result. Therefore, only a calibration result of the solution of the present invention is provided below.

FIG. 10 is a side view of a point cloud of a planar reflector before and after calibration. In FIG. 10, a dashed line that intersects a vertical line represents a point cloud of the planar reflector after calibration, and a dashed line that does not intersect the vertical line represents a point cloud of the planar reflector before calibration. Table 2 shows a mean square distance of the point cloud relative to the fitted plane. It can be learned that after calibration, the mean square distance of the point cloud relative to the fitted plane decreases by more than 50%, and this indicates that this calibration solution is valid.

**Table 2**

|  | Original data | After calibration |
|---|---|---|
| Reflector on a left side in FIG. 10 | 3.2 cm | 0.5 cm |
| Reflector on a right side in FIG. 10 | 4 cm | 0.7 cm |

The solution of the present invention may be extended to external parameter calibration between a plurality of laser radar systems. Because some error parameters of the laser radar system represent a relative position and angle relationship between a plurality of modules in the laser radar system, and external parameters of the plurality of laser radar systems represent a relative position and angle relationship between the plurality of laser radar systems. These two cases are similar.

If this solution is used to calibrate an external parameter of a laser radar system including a plurality of laser radars, a to-be-calibrated parameter needs to be changed, and the plurality of laser radars need to scan a same calibration plane.

It should be understood that specific examples in embodiments of this application are merely intended to help a person skilled in the art better understand embodiments of this application, but not to limit the scope of embodiments of this application.

The apparatus for calibrating a parameter of a laser radar in the foregoing embodiment may be the processor 111 in FIG. 1a or the computer device in FIG. 1b. In actual application, another apparatus that has a corresponding function may execute the method embodiment of this application. The apparatus for calibrating a parameter of a laser radar may be implemented by a hardware structure and/or a software module. Whether a function of the apparatus for calibrating a parameter of a laser radar is implemented by hardware or in a manner of driving hardware by computer software depends on a specific application and a design constraint of this technical solution. A person skilled in the art may use different methods to implement the described functions for each particular application, but it should not be considered that the implementation goes beyond the scope of this application.

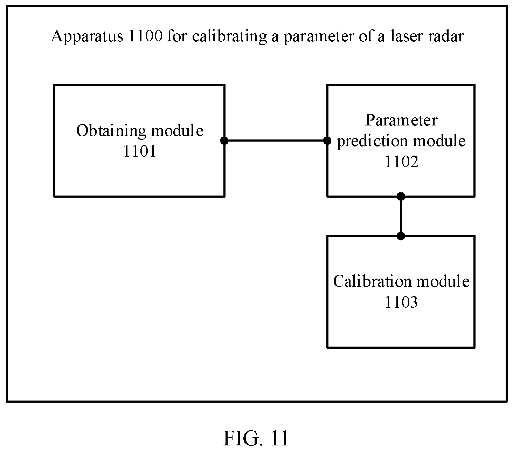

When functional units are obtained through division in an integrated manner, FIG. 11 is a schematic diagram of a structure of an apparatus for calibrating a parameter of a laser radar. As shown in FIG. 11, an apparatus 1100 for calibrating a parameter of a laser radar includes an obtaining module 1101, a parameter prediction module 1102, and a calibration module 1103.

The obtaining module 1101 is configured to obtain three-dimensional coordinates, in a same coordinate system, of a plurality of sampling points detected on a calibration plane by a plurality of beams of laser light transmitted by a laser radar system, where the three-dimensional coordinates of the plurality of sampling points are obtained by inputting measurement information of the plurality of sampling points into a point cloud computing algorithm using a first parameter as a variable, three-dimensional coordinates of any one of the plurality of sampling points are a function using the first parameter as an independent variable, and the measurement information of the plurality of sampling points is used to determine target angles and target distances of the plurality of sampling points relative to the laser radar system. The parameter prediction module 1102 is configured to determine a predicted value that is of the first parameter and that enables a cost function using the first parameter as an independent variable to have an optimal solution, where the cost function is determined based on the three-dimensional coordinates of the plurality of sampling points and a fitting function for the plurality of sampling points, and the predicted value of the first parameter is used to enable the three-dimensional coordinates of the plurality of sampling points to meet the fitting function. The calibration module 1103 is configured to assign a value to the first parameter in the point cloud computing algorithm based on the predicted value of the first parameter.

In a possible implementation, the calibration plane is a plane, and the fitting function is a plane equation.

In a possible implementation, the cost function is positively correlated with a first cost function; and the first cost function is determined based on first distances from the plurality of sampling points to a plane represented by the fitting function, and the first distance is a function using the first parameter as an independent variable.

In a possible implementation, the calibration plane includes a first calibration plane and a second calibration plane, the plurality of sampling points include a first sampling point detected on the first calibration plane by the laser radar system and a second sampling point detected on the second calibration plane, and the fitting function includes a first fitting function for the first sampling point and a second fitting function for the second sampling point. The cost function is positively correlated with a second cost function, the second cost function is determined based on the first fitting function, the second fitting function, and a relative position relationship between the first calibration plane and the second calibration plane, and the second cost function uses the first parameter as an independent variable.

In a possible implementation, the relative position relationship is used to indicate that the first calibration plane and the second calibration plane are perpendicular to each other, or is used to indicate that the first calibration plane and the second calibration plane are parallel to each other, or is used to indicate a distance between the first calibration plane and the second calibration plane that are parallel to each other.

In a possible implementation, the first parameter is used to eliminate a computing error of the point cloud computing algorithm.

In a possible implementation, the first parameter includes at least one of a measurement error parameter and a coordinate transformation error parameter, the measurement error parameter is used to eliminate an error of the measurement information of the plurality of sampling points, the coordinate transformation error parameter is used to eliminate an error introduced by a coordinate transformation process, and the coordinate transformation process is used to transform three-dimensional coordinates of sampling points detected by different laser modules in the laser radar system into the same coordinate system.

For example, the apparatus for calibrating a parameter of a laser radar may be implemented in a form of a chip, and the chip may include a processor and an interface circuit. The interface circuit (or referred to as a communications interface) may be, for example, an input/output interface, a pin, or a circuit on the chip. The processor may execute a computer instruction stored in the memory, so that the chip executes any one of the foregoing method embodiments. Optionally, the memory may be a storage unit in the chip, such as a register or a cache, or the memory may be a memory in a computer device outside the chip, such as a read-only memory (read-only memory, ROM) or another type of static storage device that can store static information and instructions, or a random access memory (random access memory, RAM). Optionally, the processor may be a general central processing unit (CPU), a microprocessor, an application-specific integrated circuit (application-specific integrated circuit, ASIC), or one or more integrated circuits configured to control program execution of any one of the foregoing method embodiments.

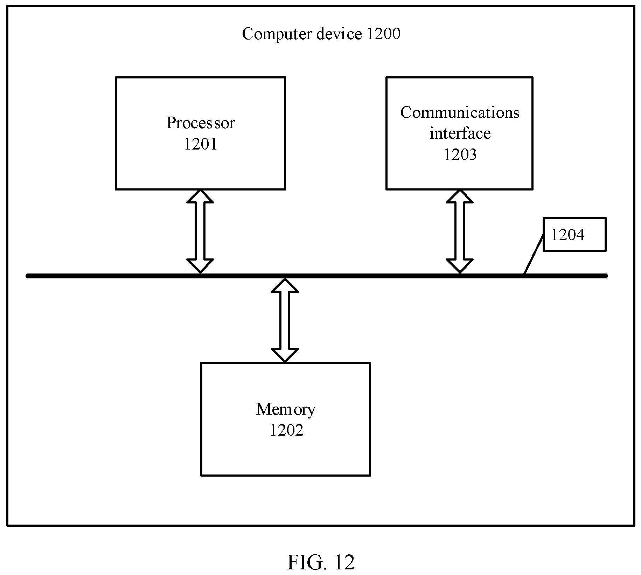

For example, the apparatus for calibrating a parameter of a laser radar may be implemented in a form of a computer device. FIG. 12 is a schematic diagram of a computer device 1200 according to this application, and a parameter calibration apparatus may be the computer device 1200 shown in FIG. 12. The computer device 1200 may include components such as a processor 1201 and a memory 1202.

A person skilled in the art may understand that a structure of the computer device shown in FIG. 12 does not constitute a limitation on the computer device, and the computer device may include more or fewer components than those shown in the figure, or combine some components, or have different component arrangements.

Each constituent part of the computer device 1200 is specifically described below with reference to FIG. 12.

The memory 1202 may be configured to store a software program and a module. The processor 1201 executes various functional applications and data processing of the computer device by running the software program and the module that are stored in the memory 1202.

The memory 1202 may mainly include a program storage area and a data storage area. The program storage area may store an operating system and an application program required by at least one function. The data storage area may store data created based on use of the computer device, and the like. In addition, the memory 1202 may include a high-speed random access memory, or may include a nonvolatile memory, such as at least one magnetic disk storage device, a flash memory, or another volatile solid-state storage device.

The processor 1201 is a control center of the computer device, and is connected to all parts of the entire computer device by using various interfaces and lines, and performs various functions of the computer device and processes data by running or executing the software program and/or the module that are stored in the memory 1202 and invoking the data stored in the memory 1202, to implement overall monitoring on the computer device. The processor 1201 may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field-programmable gate array (field programmable gate array, FPGA) or another programmable logic device, a discrete gate or a transistor logic device, or a discrete hardware component. The methods, the steps, and logical block diagrams that are disclosed in this application may be implemented or performed. A general-purpose processor may be a microprocessor, or the processor may be any conventional processor or the like. The steps of the methods disclosed in this application may be directly executed and completed by using a hardware decoding processor, or may be executed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. Although only one processor is shown in the figure, the apparatus may include a plurality of processors, or the processor includes a plurality of processing units. Specifically, the processor 1201 may be a singlecore processor, or may be a multi-core processor. The processor 1201 may be an ARM architecture processor. Optionally, the processor 1201 may be integrated with an application processor and a modem processor. The application processor mainly processes an operating system, a user interface, an application program, and the like, and the modem processor mainly processes wireless communication. It may be understood that the foregoing modem processor may be not integrated into the processor 1201.

In a possible implementation, the computing device 1200 may further include a communications interface 1203 and a bus 1204. The memory 1202 and the communications interface 1203 may be connected to the processor 1201 by using the bus 1204. The bus 1204 may be a peripheral component interconnect (peripheral component interconnect, PCI) bus, an extended industry standard architecture (extended industry standard architecture, EISA) bus, or the like. The bus 1204 may be classified into an address bus, a data bus, a control bus, and the like. For ease of representation, only one line is used to represent the bus in FIG. 12, but this does not mean that there is only one bus or only one type of bus.

The computer device 1200 may be connected to a photodetector of a laser radar by using the communications interface 1203, to receive a data signal sent by the photodetector.

All or some of the foregoing embodiments may be implemented by using software, hardware, firmware, or any combination thereof. When software is used for implementation, all or some of the foregoing embodiments may be implemented in a form of a computer program product.

The computer program product includes one or more computer instructions. When the computerexecutable instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

An embodiment of this application further provides a laser radar system, including a laser source, a photodetector, a processor, and a memory. The laser source is configured to generate a plurality of beams of laser light and emit the plurality of beams of laser light to a calibration plane, and the photodetector is configured to detect echo signals of the plurality of beams of laser light. When running computer instructions stored in the memory, the processor performs the method in any method embodiment provided in this application. For a structure of the laser radar system, refer to embodiments corresponding to FIG. 1a and FIG. 1b. Details are not described herein again.

The technical solutions provided in this application are described in detail above. The principle and implementations of this application are described herein by using specific examples. The descriptions about embodiments are merely provided to help understand the methods and core ideas of this application.

**Claims**

1. A method for calibrating a parameter of a laser radar, comprising:

   obtaining (501) three-dimensional coordinates, in a same coordinate system, of a plurality of sampling points detected on a calibration plane by a plurality of beams of laser light transmitted by a laser radar system, wherein the three-dimensional coordinates of the plurality of sampling points are obtained by inputting measurement information of the plurality of sampling points into a point cloud computing algorithm using a first parameter as a variable, three-dimensional coordinates of any one of the plurality of sampling points are a function using the first parameter as an independent variable, and the measurement information of the plurality of sampling points is used to determine target angles and target distances of the plurality of sampling points relative to the laser radar system;

   determining (502) a predicted value that is of the first parameter and that enables a cost function using the first parameter as an independent variable to have an optimal solution, wherein the cost function is determined based on the three-dimensional coordinates of the plurality of sampling points and a fitting function for the plurality of sampling points, and the predicted value of the first parameter is used to enable the three-dimensional coordinates of the plurality of sampling points to meet the fitting function; and

   assigning (503) a value to the first parameter in the point cloud computing algorithm based on the predicted value of the first parameter.

2. The method according to claim 1, wherein the calibration plane is a plane, and the fitting function is a plane equation.

3. The method according to claim 2, wherein the cost function is positively correlated with a first cost function; and the first cost function is determined based on first distances from the plurality of sampling points to a plane represented by the fitting function, and the first distance is a function using the first parameter as an independent variable.

4. The method according to claim 2 or 3, wherein the calibration plane comprises a first calibration plane and a second calibration plane, the plurality of sampling points comprise a first sampling point detected on the first calibration plane by the laser radar system and a second sampling point detected on the second calibration plane, and the fitting function comprises a first fitting function for the first sampling point and a second fitting function for the second sampling point; and

   the cost function is positively correlated with a second cost function, the second cost function is determined based on the first fitting function, the second fitting function, and a relative position relationship between the first calibration plane and the second calibration plane, and the second cost function uses the first parameter as an independent variable.

5. The method according to claim 4, wherein the relative position relationship is used to indicate that

   the first calibration plane and the second calibration plane are perpendicular to each other, or
   is used to indicate that the first calibration plane and the second calibration plane are parallel to each other, or
   is used to indicate a distance between the first calibration plane and the second calibration plane that are parallel to each other.

6. The method according to any one of claims 1 to 5, wherein the first parameter is used to eliminate a computing error of the point cloud computing algorithm.

7. The method according to claim 6, wherein the first parameter comprises at least one of a measurement error parameter and a coordinate transformation error parameter, the measurement error parameter is used to eliminate an error of the measurement information of the plurality of sampling points, the coordinate transformation error parameter is used to eliminate an error introduced by a coordinate transformation process, and the coordinate transformation process is used to transform three-dimensional coordinates of sampling points detected by different laser modules in the laser radar system into the same coordinate system.

8. An apparatus for calibrating a parameter of a laser radar, comprising:

an obtaining module (1101), configured to obtain three-dimensional coordinates, in a same coordinate system, of a plurality of sampling points detected on a calibration plane by a plurality of beams of laser light transmitted by a laser radar system, wherein the three-dimensional coordinates of the plurality of sampling points are obtained by inputting measurement information of the plurality of sampling points into a point cloud computing algorithm using a first parameter as a variable, three-dimensional coordinates of any one of the plurality of sampling points are a function using the first parameter as an independent variable, and the measurement information of the plurality of sampling points is used to determine target angles and target distances of the plurality of sampling points relative to the laser radar system;

a parameter prediction module (1102), configured to determine a predicted value that is of the first parameter and that enables a cost function using the first parameter as an independent variable to have an optimal solution, wherein the cost function is determined based on the three-dimensional coordinates of the plurality of sampling points and a fitting function for the plurality of sampling points, and the predicted value of the first parameter is used to enable the three-dimensional coordinates of the plurality of sampling points to meet the fitting function; and

a calibration module (1103), configured to assign a value to the first parameter in the point cloud computing algorithm based on the predicted value of the first parameter.

9. The apparatus according to claim 8, wherein the calibration plane is a plane, and the fitting function is a plane equation.

10. The apparatus according to claim 9, wherein the cost function is positively correlated with a first cost function; and the first cost function is determined based on first distances from the plurality of sampling points to a plane represented by the fitting function, and the first distance is a function using the first parameter as an independent variable.

11. The apparatus according to claim 9 or 10, wherein the calibration plane comprises a first calibration plane and a second calibration plane, the plurality of sampling points comprise a first sampling point detected on the first calibration plane by the laser radar system and a second sampling point detected on the second calibration plane, and the fitting function comprises a first fitting function for the first sampling point and a second fitting function for the second sampling point; and

the cost function is positively correlated with a second cost function, the second cost function is determined based on the first fitting function, the second fitting function, and a relative position relationship between the first calibration plane and the second calibration plane, and the second cost function uses the first parameter as an independent variable.

12. The apparatus according to claim 11, wherein the relative position relationship is used to indicate that

the first calibration plane and the second calibration plane are perpendicular to each other, or is used to indicate that the first calibration plane and the second calibration plane are parallel to each other, or is used to indicate a distance between the first calibration plane and the second calibration plane that are parallel to each other.

13. The apparatus according to any one of claims 8 to 12, wherein the first parameter is used to eliminate a computing error of the point cloud computing algorithm.

14. The apparatus according to claim 13, wherein the first parameter comprises at least one of a measurement error parameter and a coordinate transformation error parameter, the measurement error parameter is used to eliminate an error of the measurement information of the plurality of sampling points, the coordinate transformation error parameter is used to eliminate an error introduced by a coordinate transformation process, and the coordinate transformation process is used to transform three-dimensional coordinates of sampling points detected by different laser modules in the laser radar system into the same coordinate system.

15. A computer-readable storage medium, comprising instructions, wherein when the instructions are run on a computer, the computer is enabled to perform the method according to any one of claims 1 to 7.

**Patentansprüche**

1. Verfahren zum Kalibrieren eines Parameters eines Laserradars, umfassend:

Erlangen (501) dreidimensionaler Koordinaten, in einem gleichen Koordinatensystem, einer Vielzahl von Abtastpunkten, die auf einer Kalibrierungsebene durch eine Vielzahl von Laserlichtstrahlen, die durch ein Laserradarsystem übertragen wird, detektiert werden, wobei die dreidimensionalen Koordinaten der Vielzahl von Abtastpunkten durch Eingeben von Messinformationen der Vielzahl von Abtastpunkten in einen Punktwolkenberechnungsalgorithmus unter Verwendung eines ersten Parameters als eine Variable erlangt werden, dreidimensionale Koordinaten eines beliebigen der Vielzahl von Abtastpunkten eine Funktion sind, die den ersten Parameter als eine unabhängige Variable verwendet, und die Messinformationen der Vielzahl von Abtastpunkten dazu verwendet werden, Zielwinkel und Zielentfernungen der Vielzahl von Abtastpunkten relativ zu dem Laserradarsystem zu bestimmen;

Bestimmen (502) eines vorhergesagten Wertes, der dem ersten Parameter angehört und der es einer Kostenfunktion, die den ersten Parameter als eine unabhängige Variable verwendet, ermöglicht, eine optimale Lösung aufzuweisen, wobei die Kostenfunktion basierend auf den dreidimensionalen Koordinaten der Vielzahl von Abtastpunkten und einer Anpassungsfunktion für die Vielzahl von Abtastpunkten bestimmt wird und der vorhergesagte Wert des ersten Parameters dazu verwendet wird, es den dreidimensionalen Koordinaten der Vielzahl von Abtastpunkten zu ermöglichen, die Anpassungsfunktion zu erfüllen; und

Zuweisen (503) eines Wertes zu dem ersten Parameter in dem Punktwolkenberechnungsalgorithmus basierend auf dem vorhergesagten Wert des ersten Parameters.

2. Verfahren nach Anspruch 1, wobei die Kalibrierungsebene eine Ebene ist und die Anpassungsfunktion eine Ebenengleichung ist.

3. Verfahren nach Anspruch 2, wobei die Kostenfunktion positiv mit einer ersten Kostenfunktion korreliert ist; und die erste Kostenfunktion basierend auf ersten Entfernungen von der Vielzahl von Abtastpunkten zu einer Ebene, die durch die Anpassungsfunktion dargestellt wird, bestimmt wird und die erste Entfernung eine Funktion ist, die den ersten Parameter als eine unabhängige Variable verwendet.

4. Verfahren nach Anspruch 2 oder 3, wobei die Kalibrierungsebene eine erste Kalibrierungsebene und eine zweite Kalibrierungsebene umfasst, die Vielzahl von Abtastpunkten einen ersten Abtastpunkt, der durch das Laserradarsystem auf der ersten Kalibrierungsebene detektiert wird, und einen zweiten Abtastpunkt, der auf der zweiten Kalibrierungsebene detektiert wird, umfasst und die Anpassungsfunktion eine erste Anpassungsfunktion für den ersten Abtastpunkt und eine zweite Anpassungsfunktion für den zweiten Abtastpunkt umfasst; und die Kostenfunktion positiv mit einer zweiten Kostenfunktion korreliert ist, die zweite Kostenfunktion basierend auf der ersten Anpassungsfunktion, der zweiten Anpassungsfunktion und einer relativen Positionsbeziehung zwischen der ersten Kalibrierungsebene und der zweiten Kalibrierungsebene bestimmt wird und die zweite Kostenfunktion den ersten Parameter als eine unabhängige Variable verwendet.

5. Verfahren nach Anspruch 4, wobei die relative Positionsbeziehung dazu verwendet wird, anzugeben, dass

die erste Kalibrierungsebene und die zweite Kalibrierungsebene senkrecht zueinander sind, oder
dazu verwendet wird, anzugeben, dass die erste Kalibrierungsebene und die zweite Kalibrierungsebene parallel zueinander sind, oder
dazu verwendet wird, eine Entfernung zwischen der ersten Kalibrierungsebene und der zweiten Kalibrierungsebene anzugeben, die parallel zueinander sind.

6. Verfahren nach einem der Ansprüche 1 bis 5, wobei der erste Parameter dazu verwendet wird, einen Berechnungsfehler des Punktwolkenberechnungsalgorithmus zu beseitigen.

7. Verfahren nach Anspruch 6, wobei der erste Parameter mindestens einen eines Messfehlerparameters und eines Koordinatentransformationsfehlerparameters umfasst, der Messfehlerparameter dazu verwendet wird, einen Fehler der Messinformationen der Vielzahl von Abtastpunkten zu beseitigen, der Koordinatentransformationsfehlerparameter dazu verwendet wird, einen Fehler, der durch einen Koordinatentransformationsprozess verursacht wird, zu beseitigen, und der Koordinatentransformationsprozess dazu verwendet wird, dreidimensionale Koordinaten von Abtastpunkten, die durch unterschiedliche Lasermodule in dem Laserradarsystem detektiert werden, in das gleiche Koordinatensystem zu transformieren.

8. Vorrichtung zum Kalibrieren eines Parameters eines Laserradars, umfassend:

ein Erlangungsmodul (1101), das dazu konfiguriert ist, dreidimensionale Koordinaten, in einem gleichen Koordinatensystem, einer Vielzahl von Abtastpunkten zu erlangen, die auf einer Kalibrierungsebene durch eine Vielzahl von Laserlichtstrahlen, die durch ein Laserradarsystem übertragen wird, detektiert werden, wobei die dreidimensionalen Koordinaten der Vielzahl von Abtastpunkten durch Eingeben von Messinformationen der Vielzahl von Abtastpunkten in einen Punktwolkenberechnungsalgorithmus unter Verwendung eines ersten Parameters als eine Variable erlangt werden, dreidimensionale Koordinaten eines beliebigen der Vielzahl von Abtastpunkten eine Funktion sind, die den ersten Parameter als eine unabhängige Variable verwendet, und die Messinformationen der Vielzahl von Abtastpunkten dazu verwendet werden, Zielwinkel und Zielentfernungen der Vielzahl von Abtastpunkten relativ zu dem Laserradarsystem zu bestimmen;

ein Parametervorhersagemodul (1102), das dazu konfiguriert ist, einen vorhergesagten Wert zu bestimmen, der dem ersten Parameter angehört und der es einer Kostenfunktion, die den ersten Parameter als eine unabhängige Variable verwendet, ermöglicht, eine optimale Lösung aufzuweisen, wobei die Kostenfunktion basierend auf den dreidimensionalen Koordinaten der Vielzahl von Abtastpunkten und einer Anpassungsfunktion für die Vielzahl von Abtastpunkten bestimmt wird und der vorhergesagte Wert des ersten Parameters dazu verwendet wird, es den dreidimensionalen Koordinaten der Vielzahl von Abtastpunkten zu ermöglichen, die Anpassungsfunktion zu erfüllen; und

ein Kalibrierungsmodul (1103), das dazu konfiguriert ist, dem ersten Parameter in dem Punktwolkenberechnungsalgorithmus basierend auf dem vorhergesagten Wert des ersten Parameters einen Wert zuzuweisen.

9. Vorrichtung nach Anspruch 8, wobei die Kalibrierungsebene eine Ebene ist und die Anpassungsfunktion eine Ebenengleichung ist.

10. Vorrichtung nach Anspruch 9, wobei die Kostenfunktion positiv mit einer ersten Kostenfunktion korreliert ist; und die erste Kostenfunktion basierend auf ersten Entfernungen von der Vielzahl von Abtastpunkten zu einer Ebene, die durch die Anpassungsfunktion dargestellt wird, bestimmt wird und die erste Entfernung eine Funktion ist, die den ersten Parameter als eine unabhängige Variable verwendet.

11. Vorrichtung nach Anspruch 9 oder 10, wobei die Kalibrierungsebene eine erste Kalibrierungsebene und eine zweite Kalibrierungsebene umfasst, die Vielzahl von Abtastpunkten einen ersten Abtastpunkt, der durch das Laserradarsystem auf der ersten Kalibrierungsebene detektiert wird, und einen zweiten Abtastpunkt, der auf der zweiten Kalibrierungsebene detektiert wird, umfasst und die Anpassungsfunktion eine erste Anpassungsfunktion für den ersten Abtastpunkt und eine zweite Anpassungsfunktion für den zweiten Abtastpunkt umfasst; und die Kostenfunktion positiv mit einer zweiten Kostenfunktion korreliert ist, die zweite Kostenfunktion basierend auf der ersten Anpassungsfunktion, der zweiten Anpassungsfunktion und einer relativen Positionsbeziehung zwischen der ersten Kalibrierungsebene und der zweiten Kalibrierungsebene bestimmt wird und die zweite Kostenfunktion den ersten Parameter als eine unabhängige Variable verwendet.

12. Vorrichtung nach Anspruch 11, wobei die relative Positionsbeziehung dazu verwendet wird, anzugeben, dass

die erste Kalibrierungsebene und die zweite Kalibrierungsebene senkrecht zueinander sind, oder dazu verwendet wird, anzugeben, dass die erste Kalibrierungsebene und die zweite Kalibrierungsebene parallel zueinander sind, oder dazu verwendet wird, eine Entfernung zwischen der ersten Kalibrierungsebene und der zweiten Kalibrierungsebene anzugeben, die parallel zueinander sind.

13. Vorrichtung nach einem der Ansprüche 8 bis 12, wobei der erste Parameter dazu verwendet wird, einen Berechnungsfehler des Punktwolkenberechnungsalgorithmus zu beseitigen.

14. Vorrichtung nach Anspruch 13, wobei der erste Parameter mindestens einen eines Messfehlerparameters und eines Koordinatentransformationsfehlerparameters umfasst, der Messfehlerparameter dazu verwendet wird, einen Fehler der Messinformationen der Vielzahl von Abtastpunkten zu beseitigen, der Koordinatentransformationsfehlerparameter dazu verwendet wird, einen Fehler, der durch einen Koordinatentransformationsprozess verursacht wird, zu beseitigen, und der Koordinatentransformationsprozess dazu verwendet wird, dreidimensionale Koordinaten von Abtastpunkten, die durch unterschiedliche Lasermodule in dem Laserradarsystem detektiert werden, in das gleiche Koordinatensystem zu transformieren.

15. Computerlesbares Speichermedium, umfassend Anweisungen, wobei, wenn die Anweisungen auf einem Computer ausgeführt werden, es dem Computer ermöglicht wird, das Verfahren nach einem der Ansprüche 1 bis 7 durchzuführen.

**Revendications**

1. Procédé d'étalonnage d'un paramètre d'un radar à laser, comprenant :

   l'obtention (501) de coordonnées tridimensionnelles, dans un même système de coordonnées, d'une pluralité de points d'échantillonnage détectés sur un plan d'étalonnage par une pluralité de faisceaux de lumière à laser transmis par un système radar à laser, dans lequel les coordonnées tridimensionnelles de la pluralité de points d'échantillonnage sont obtenues en entrant des informations de mesure de la pluralité de points d'échantillonnage dans un algorithme de calcul de nuage de points utilisant un premier paramètre en tant que variable, des coordonnées tridimensionnelles de l'un quelconque de la pluralité de points d'échantillonnage sont une fonction utilisant le premier paramètre en tant que variable indépendante, et les informations de mesure de la pluralité de points d'échantillonnage sont utilisées pour déterminer des angles cibles et des distances cibles de la pluralité de points d'échantillonnage par rapport au système radar à laser ;
   la détermination (502) d'une valeur prédite qui est celle du premier paramètre et qui permet à une fonction de coût utilisant le premier paramètre en tant que variable indépendante d'avoir une solution optimale, dans lequel la fonction de coût est déterminée sur la base des coordonnées tridimensionnelles de la pluralité de points d'échantillonnage et d'une fonction d'ajustement pour la pluralité de points d'échantillonnage, et la valeur prédite du premier paramètre est utilisée pour permettre aux coordonnées tridimensionnelles de la pluralité de points d'échantillonnage de satisfaire à la fonction d'ajustement ; et
   l'attribution (503) d'une valeur au premier paramètre dans l'algorithme de calcul de nuage de points sur la base de la valeur prédite du premier paramètre.

2. Procédé selon la revendication 1, dans lequel le plan d'étalonnage est un plan, et la fonction d'ajustement est une équation plane.

3. Procédé selon la revendication 2, dans lequel la fonction de coût est corrélée positivement à une première fonction de coût ; et
   la première fonction de coût est déterminée sur la base de premières distances de la pluralité de points d'échantillonnage à un plan représenté par la fonction d'ajustement, et la première distance est une fonction utilisant le premier paramètre en tant que variable indépendante.

4. Procédé selon la revendication 2 ou 3, dans lequel le plan d'étalonnage comprend un premier plan d'étalonnage et un second plan d'étalonnage, la pluralité de points d'échantillonnage comprennent un premier point d'échantillonnage détecté sur le premier plan d'étalonnage par le système radar à laser et un second point d'échantillonnage détecté sur le second plan d'étalonnage, et la fonction d'ajustement comprend une première fonction d'ajustement pour le premier point d'échantillonnage et une seconde fonction d'ajustement pour le second point d'échantillonnage ; et
   la fonction de coût est corrélée positivement avec une seconde fonction de coût, la seconde fonction de coût est déterminée sur la base de la première fonction d'ajustement, de la seconde fonction d'ajustement, et d'une relation de position relative entre le premier plan d'étalonnage et le second plan d'étalonnage, et la seconde fonction de coût utilise le premier paramètre en tant que variable indépendante.

5. Procédé selon la revendication 4, dans lequel la relation de position relative est utilisée pour indiquer que

   le premier plan d'étalonnage et le second plan d'étalonnage sont perpendiculaires l'un à l'autre, ou est utilisée pour indiquer que le premier plan d'étalonnage et le second plan d'étalonnage sont parallèles l'un à l'autre, ou est utilisée pour indiquer une distance entre le premier plan d'étalonnage et le second plan d'étalonnage qui sont parallèles l'un à l'autre.

6. Procédé selon l'une quelconque des revendications 1 à 5, dans lequel le premier paramètre est utilisé pour éliminer une erreur de calcul de l'algorithme de calcul de nuage de points.

7. Procédé selon la revendication 6, dans lequel le premier paramètre comprend au moins l'un d'un paramètre d'erreur de mesure et d'un paramètre d'erreur de transformation de coordonnées, le paramètre d'erreur de mesure est utilisé pour éliminer une erreur des informations de mesure de la pluralité de points d'échantillonnage, le paramètre d'erreur de transformation de coordonnées est utilisé pour éliminer une erreur introduite par un processus de transformation de coordonnées, et le processus de transformation de coordonnées est utilisé pour transformer les coordonnées tridimensionnelles des points d'échantillonnage détectés par différents modules à laser dans le système radar à laser dans le même système de coordonnées.

8. Appareil d'étalonnage d'un paramètre d'un radar à laser, comprenant :

un module d'obtention (1101), configuré pour obtenir des coordonnées tridimensionnelles, dans un même système de coordonnées, d'une pluralité de points d'échantillonnage détectés sur un plan d'étalonnage par une pluralité de faisceaux de lumière à laser transmis par un système radar à laser, dans lequel les coordonnées tridimensionnelles de la pluralité de points d'échantillonnage sont obtenues en entrant des informations de mesure de la pluralité de points d'échantillonnage dans un algorithme de calcul de nuage de points utilisant un premier paramètre en tant que variable, des coordonnées tridimensionnelles de l'un quelconque de la pluralité de points d'échantillonnage sont une fonction utilisant le premier paramètre en tant que variable indépendante, et les informations de mesure de la pluralité de points d'échantillonnage sont utilisées pour déterminer des angles cibles et des distances cibles de la pluralité de points d'échantillonnage par rapport au système radar à laser ; un module de prédiction de paramètre (1102), configuré pour déterminer une valeur prédite qui est celle du premier paramètre et qui permet à une fonction de coût utilisant le premier paramètre en tant que variable indépendante d'avoir une solution optimale, dans lequel la fonction de coût est déterminée sur la base des coordonnées tridimensionnelles de la pluralité de points d'échantillonnage et d'une fonction d'ajustement pour la pluralité de points d'échantillonnage, et la valeur prédite du premier paramètre est utilisée pour permettre aux coordonnées tridimensionnelles de la pluralité de points d'échantillonnage de satisfaire à la fonction d'ajustement ; et un module d'étalonnage (1103), configuré pour attribuer une valeur au premier paramètre dans l'algorithme de calcul de nuage de points sur la base de la valeur prédite du premier paramètre.

9. Procédé selon la revendication 8, dans lequel le plan d'étalonnage est un plan, et la fonction d'ajustement est une équation plane.

10. Appareil selon la revendication 9, dans lequel la fonction de coût est corrélée positivement à une première fonction de coût ; et la première fonction de coût est déterminée sur la base de premières distances de la pluralité de points d'échantillonnage à un plan représenté par la fonction d'ajustement, et la première distance est une fonction utilisant le premier paramètre en tant que variable indépendante.

11. Appareil selon la revendication 9 ou 10, dans lequel le plan d'étalonnage comprend un premier plan d'étalonnage et un second plan d'étalonnage, la pluralité de points d'échantillonnage comprennent un premier point d'échantillonnage détecté sur le premier plan d'étalonnage par le système radar à laser et un second point d'échantillonnage détecté sur le second plan d'étalonnage, et la fonction d'ajustement comprend une première fonction d'ajustement pour le premier point d'échantillonnage et une seconde fonction d'ajustement pour le second point d'échantillonnage ; et la fonction de coût est corrélée positivement avec une seconde fonction de coût, la seconde fonction de coût est déterminée sur la base de la première fonction d'ajustement, de la seconde fonction d'ajustement, et d'une relation de position relative entre le premier plan d'étalonnage et le second plan d'étalonnage, et la seconde fonction de coût utilise le premier paramètre en tant que variable indépendante.

12. Appareil selon la revendication 11, dans lequel la relation de position relative est utilisée pour indiquer que

le premier plan d'étalonnage et le second plan d'étalonnage sont perpendiculaires l'un à l'autre, ou est utilisée pour indiquer que le premier plan d'étalonnage et le second plan d'étalonnage sont parallèles l'un à l'autre, ou est utilisée pour indiquer une distance entre le premier plan d'étalonnage et le second plan d'étalonnage qui sont parallèles l'un à l'autre.

13. Appareil selon l'une quelconque des revendications 8 à 12, dans lequel le premier paramètre est utilisé pour éliminer une erreur de calcul de l'algorithme de calcul de nuage de points.

14. Appareil selon la revendication 13, dans lequel le premier paramètre comprend au moins l'un d'un paramètre d'erreur de mesure et d'un paramètre d'erreur de transformation de coordonnées, le paramètre d'erreur de mesure est utilisé pour éliminer une erreur des informations de mesure de la pluralité de points d'échantillonnage, le paramètre d'erreur de transformation de coordonnées est utilisé pour éliminer une erreur introduite par un processus de transformation de coordonnées, et le processus de transformation de coordonnées est utilisé pour transformer les coordonnées tridimensionnelles des points d'échantillonnage détectés par différents modules à laser dans le système radar à laser dans le même système de coordonnées.

15. Support de stockage lisible par ordinateur, comprenant des instructions, dans lequel, lorsque les instructions sont exécutées sur un ordinateur, l'ordinateur est activé pour réaliser le procédé selon l'une quelconque des revendications 1 à 7.

EP 4 109 131 B1

FIG. 1a

FIG. 1b

FIG. 2

FIG. 3a

FIG. 3b

FIG. 3c

Calibration
plane 2

Calibration
plane 3

Calibration
plane 1

z   y

o   x

FIG. 4

| Obtain three-dimensional coordinates, in a same radar coordinate system, of a plurality of sampling points detected on a calibration plane by a plurality of beams of laser light transmitted by a laser radar system | 501 |

| Determine a predicted value that is of a first parameter and that enables a cost function using the first parameter as an independent variable to have an optimal solution | 502 |

| Assign a value to a first parameter in a point cloud computing algorithm based on the predicted value of the first parameter | 503 |

FIG. 5

FIG. 6a

FIG. 6b

FIG. 6c

FIG. 7a

FIG. 7b

FIG. 7c

FIG. 7d

FIG. 7e

FIG. 8a

FIG. 8b

FIG. 8c

FIG. 8d

FIG. 8e

FIG. 9

FIG. 10

Apparatus 1100 for calibrating a parameter of a laser radar

Obtaining module
1101

Parameter
prediction module
1102

Calibration module
1103

FIG. 11

Computer device 1200

Processor
1201

Communications
interface
1203

1204

Memory
1202

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019032588 A1

**Non-patent literature cited in the description**

- **N MUHAMMAD** ; **S LACROIX**. Calibration of a Rotating Multi-Beam Lidar. *Intelligent Robots and Systems (IROS), 2010 IEEE/RSJ International Conference*, 18 October 2010, 5648-5653

- **FARAZ M MIRZAEI et al.** *3D Lidar-Camera Intrinsic and Extrinsic Calibration: Observability Analysis and Analytical Least Squares-based Initialization*, 01 January 2012